(19) Europäisches Patentamt
European Patent Office
Office européen des brevets

(11) **EP 2 176 111 B1**

(12) **FASCICULE DE BREVET EUROPEEN**

(45) Date de publication et mention de la délivrance du brevet:
**07.09.2011 Bulletin 2011/36**

(51) Int Cl.:
***B60W 40/10*** $^{(2006.01)}$

(21) Numéro de dépôt: **08827167.1**

(86) Numéro de dépôt international:
**PCT/FR2008/051371**

(22) Date de dépôt: **21.07.2008**

(87) Numéro de publication internationale:
**WO 2009/019392 (12.02.2009 Gazette 2009/07)**

(54) **PROCEDE D'ESTIMATION DU GLISSEMENT DES ROUES D'UN VEHICULE ET DISPOSITIF POUR SA MISE EN OEUVRE**

VERFAHREN ZUR SCHÄTZUNG DES GLEITVERHALTENS DER RÄDER EINES FAHRZEUGS UND VORRICHTUNG ZUR ANWENDUNG DIESES VERFAHRENS

METHOD FOR ESTIMATING THE SLIDING OF THE WHEELS OF A VEHICLE AND DEVICE FOR IMPLEMENTING SAME

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.08.2007 FR 0705739**

(43) Date de publication de la demande:
**21.04.2010 Bulletin 2010/16**

(73) Titulaire: **Renault s.a.s.**
**92100 Boulogne-Billancourt (FR)**

(72) Inventeurs:
• **CLAEYS, Xavier**
**F-75015 Paris (FR)**
• **CREGUT, Samuel**
**F-78470 Saint Remy Les Chevreuse (FR)**
• **MARSILIA, Marco**
**F-92100 Boulogne Billancourt (FR)**
• **OBERTI, Claire**
**F-75014 Paris (FR)**

(56) Documents cités:
EP-A- 0 252 384     EP-A- 1 785 328
DE-A1- 3 545 012     DE-A1- 3 722 049
DE-A1-102004 040 757     FR-A- 2 896 467

• PUSCA R ET AL: "Fuzzy logic based control for electric vehicle with four separate traction drives" VTC SPRING 2002. IEEE 55TH. VEHICULAR TECHNOLOGY CONFERENCE. PROCEEDINGS. BIRMINGHAM, AL, MAY 6 - 9, 2002, IEEE VEHICULAR TECHNOLGY CONFERENCE, NEW YORK, NY : IEEE, US, vol. VOL. 1 OF 4. CONF. 55, 6 mai 2002 (2002-05-06), pages 2089-2096, XP010622184 ISBN: 0-7803-7484-3

EP 2 176 111 B1

**Description**

L'invention concerne un procédé d'estimation du glissement des roues d'un véhicule automobile.

Un domaine d'application de l'invention est les véhicules automobiles dans lesquels ce procédé est mis en oeuvre par un calculateur embarqué.

En particulier, le procédé peut être utilisé en vue de calculer la vitesse longitudinale du véhicule.

La sécurité routière est devenue un enjeu incontournable pour les constructeurs automobiles, et notamment la sécurité active. Les fournisseurs de systèmes de freinage proposent déjà de nombreuses solutions : ABS, ESP, REF, AFU.

Afin d'améliorer le comportement du véhicule et d'assurer la sécurité du conducteur, il est nécessaire de posséder en temps réel un certain nombre d'informations concernant le véhicule. Le véhicule est ainsi doté de capteurs de vitesses de rotation des roues.

Un problème rencontré est que les vitesses de rotation des roues ne reflètent pas correctement le comportement du véhicule en cas de glissement.

Le document PUSCA R ET AL: "Fuzzy logic based control for electric vehicle with four separate traction drives" VTC SPRING 2002. IEEE 55TH. VEHICULAR TECHNOLOGY CONFERENCE. PROCEEDINGS. BIRMINGHAM, AL, MAY 6 - 9, 2002, IEEE VEHICULAR TECHNOLGY CONFERENCE, NEW YORK, NY : IEEE, US, vol. VOL. 1 OF 4. CONF. 55, 6 mai 2002 (2002-05-06), pages 2089-2096, XP010622184 ISBN: 0-7803-7484-3 décrit d'obtenir la vitesse d'un véhicule à partir des vitesses de rotation des roues mesurées tenant compte du glissement de ces roues, voir notamment page 2092. Dans ce document, la vitesse de rotation de chaque roue reçoit un coefficient (k) qui se base sur le glissement. Il n'est pas divulgué de calculer la vitesse du véhicule seulement sur la base des roues dont le glissement est sous un certain seuil. DE 10 2004 040 757 A divulgue de découpler une axe du véhicule pour un certain temps pour une détermination de la vitesse.

L'invention vise à obtenir un procédé d'estimation du glissement des roues d'un véhicule automobile à partir des vitesses de rotation des roues, qui soit fiable pour pouvoir être utilisé en temps réel sur le véhicule, afin le cas échéant de pouvoir utiliser les glissements estimés pour calculer d'autres informations pertinentes pour le comportement du véhicule.

A cet effet, un premier objet de l'invention est un procédé d'estimation du glissement des roues d'un véhicule automobile sur roues, à l'aide d'au moins un calculateur embarqué sur le véhicule, dans lequel

on mesure par au moins un capteur la vitesse de rotation de chaque roue du véhicule,
une vitesse de déplacement longitudinal du véhicule est obtenue,
caractérisé en ce que
on calcule pour chaque roue le glissement de la roue à partir de la vitesse de rotation de la roue et de la vitesse de déplacement longitudinal obtenue,
on calcule pour chaque roue à partir au moins de la vitesse de rotation de roue mesurée et d'au moins une autre grandeur une dérivée de glissement de la roue,
on calcule un signal de non - fiabilité des glissements des roues, prenant un premier état d'absence de fiabilité dans le cas où, pour toutes les roues, un indicateur de glissement est dans un premier état de glissement, et au moins un deuxième état sinon,

- dans le cas où le signal de non - fiabilité est dans le deuxième état, pour chaque roue, l'indicateur de glissement de roue prend le premier état de glissement, lorsque la dérivée de glissement de la roue est supérieure à un premier seuil positif prescrit ou lorsque la dérivée de glissement de la roue est inférieure à un deuxième seuil négatif prescrit ou lorsque le glissement de la roue est supérieur à un troisième seuil positif prescrit ou lorsque le glissement de la roue est inférieur à un quatrième seuil négatif prescrit, et prend sinon un deuxième état d'absence de glissement de la roue,
- dans le cas où le signal de non - fiabilité est dans le premier état, l'indicateur de glissement de roue prend le premier état de glissement lorsque la dérivée de glissement de la roue est supérieure à un cinquième seuil positif prescrit ou lorsque la dérivée de glissement de la roue est inférieure à un sixième seuil négatif prescrit.

Suivant d'autres caractéristiques de l'invention :

- On obtient à partir d'au moins un organe d'actionnement de freinage par le conducteur un signal d'indication de freinage, apte à se trouver dans un premier état de freinage ou dans un deuxième état d'absence de freinage,
on réhabilite l'indicateur de glissement de roue de son premier état de glissement à son deuxième état d'absence de glissement, lorsque à la fois les indicateurs de glissement des roues ne sont pas tous dans le premier état de glissement, le signal de freinage se trouve dans le premier état de freinage et le glissement associé est inférieur à un septième seuil positif prescrit et supérieur à un huitième seuil négatif prescrit pendant une première durée prescrite.

- On obtient à partir d'au moins un organe d'actionnement de freinage par le conducteur un signal d'indication de freinage, apte à se trouver dans un premier état de freinage ou dans un deuxième état d'absence de freinage, on réhabilite l'indicateur de glissement de roue de son premier état de glissement à son deuxième état d'absence de glissement, lorsque à la fois les indicateurs de glissement des roues ne se trouvent pas tous dans le premier état de glissement, le signal de freinage se trouve dans le deuxième état d'absence de détection de freinage, la dérivée de glissement est inférieure à un neuvième seuil positif prescrit et supérieure à un dixième seuil négatif prescrit pendant une deuxième durée, le glissement est inférieur à un onzième seuil positif prescrit et supérieur à un douzième seuil négatif prescrit à la fin de ladite deuxième durée.

- On obtient à partir d'au moins un organe d'actionnement de freinage par le conducteur un signal d'indication de freinage, apte à se trouver dans un premier état de freinage ou dans un deuxième état d'absence de freinage, on réhabilite l'indicateur de glissement de roue de son premier état de glissement à son deuxième état d'absence de glissement, lorsque à la fois les indicateurs de glissement des roues se trouvent tous dans le premier état de glissement, le signal de freinage se trouve dans le premier état de détection de freinage et la dérivée de glissement est inférieure à un treizième seuil positif prescrit et supérieure à un quatorzième seuil négatif prescrit pendant une troisième durée prescrite.

- On obtient à partir d'au moins un organe d'actionnement de freinage par le conducteur un signal d'indication de freinage, apte à se trouver dans un premier état de freinage ou dans un deuxième état d'absence de freinage, on réhabilite l'indicateur de glissement de roue de son premier état de glissement à son deuxième état d'absence de glissement, lorsque à la fois les indicateurs de glissement des roues sont tous dans le premier état de glissement, le signal de freinage se trouve dans le deuxième état d'absence de détection de freinage, la dérivée de glissement est inférieure à un quinzième seuil positif prescrit et supérieure à un seizième seuil négatif prescrit pendant une deuxième durée.

- Le calcul de la dérivée de glissement comprend les étapes suivantes :

    a) la saisie de données sur la vitesse de rotation des roues, des couples moteurs appliqués sur les roues, des pressions de freinage, du rapport de boîte de vitesses engagé,
    b) l'estimation de l'accélération de chaque roue en effectuant une dérivation discrète et un filtrage de la vitesse de rotation de chaque roue,
    c) l'estimation du couple appliqué à chaque roue en tenant compte, de la pression de freinage, du rapport de boîte de vitesses engagé et de l'état de l'embrayage,
    d) l'estimation de l'inertie des roues pour chacun des essieux avant et arrière du véhicule,
    e) la mise en oeuvre d'une transformation géométrique de l'estimation de l'accélération de chaque roue estimée en b),
    f) l'estimation de la dérivée du glissement de chaque roue, à partir des valeurs estimées en c), d) et e).

- Le calcul du glissement de la roue est obtenu par multiplication de la vitesse de rotation de la roue par son rayon délivrant la vitesse linéaire de la roue, puis par soustraction de ladite vitesse linéaire ainsi obtenue à la vitesse de déplacement longitudinal obtenue.

- La vitesse de déplacement longitudinal du véhicule est obtenue par calcul à partir des vitesses de rotation de roues mesurées pour lesquelles l'indicateur de glissement de roue est dans le deuxième état d'absence de glissement de la roue, sans tenir compte des vitesses de rotation de roues mesurées pour lesquelles l'indicateur de glissement de roue est dans le premier état de glissement.

- Dans le cas où l'indicateur de glissement de toutes les roues se trouve dans le premier état de glissement, la vitesse de déplacement longitudinal du véhicule est obtenue par intégration d'une accélération longitudinale mesurée par un capteur d'accélération longitudinale.

- On obtient à partir d'au moins un organe d'actionnement de freinage par le conducteur un signal d'indication de freinage, apte à se trouver dans un premier état de freinage ou dans un deuxième état d'absence de freinage, lorsqu'à la fois le glissement d'une roue est négatif et le signal d'indication de freinage est dans le premier état de freinage, la vitesse de déplacement longitudinal du véhicule est obtenue à partir du maximum des vitesses de rotation des roues.

- On obtient à partir d'au moins un organe d'actionnement de freinage par le conducteur un signal d'indication de freinage, apte à se trouver dans un premier état de freinage ou dans un deuxième état d'absence de freinage, lorsqu'à la fois le glissement d'une roue est positif et le signal d'indication de freinage est dans le deuxième état d'absence de freinage, la vitesse de déplacement longitudinal du véhicule est obtenue à partir du minimum des vitesses de rotation des roues.

- On obtient une valeur de couple du ou des moteur(s) sur les roues avant et /ou arrière,

une pluralité de modes de calcul de la vitesse de déplacement longitudinal du véhicule sont définis :

- un premier mode de calcul, lorsque, à la fois le couple sur les roues avant est inférieur à un premier seuil positif prescrit et supérieur à un deuxième seuil négatif prescrit, le couple sur les roues arrière est supérieur à un troisième seuil positif prescrit ou inférieur à un quatrième seuil négatif prescrit,
- un deuxième mode de calcul, lorsque à la fois le couple sur les roues arrière est inférieur à un cinquième seuil positif prescrit et supérieur à un sixième seuil négatif prescrit, le couple sur les roues avant est supérieur à un septième seuil positif prescrit ou inférieur à un huitième seuil négatif prescrit,
- un troisième mode de calcul, lorsque les conditions correspondant aux premier et deuxièmes modes de calcul ne sont pas remplies.
- Dans le premier mode de calcul, la vitesse de déplacement longitudinal du véhicule est calculée :

  • à partir de la vitesse de rotation des roues avant, dont l'indicateur de glissement se trouvant dans le deuxième état d'absence de glissement, ou
  • si toutes les roues avant ont chacune leur indicateur de glissement se trouvant dans le premier état de glissement, à partir de la vitesse de rotation des roues arrière se trouvant dans le deuxième état d'absence de glissement.

- Dans le deuxième mode de calcul, la vitesse de déplacement longitudinal du véhicule est calculée :

  • à partir de la vitesse de rotation des roues arrière, dont l'indicateur de glissement se trouvant dans le deuxième état d'absence de glissement, ou
  • si toutes les roues arrière ont chacune leur indicateur de glissement se trouvant dans le premier état de glissement, à partir de la vitesse de rotation des roues avant se trouvant dans le deuxième état d'absence de glissement.

- Dans le troisième mode de calcul, la vitesse de déplacement longitudinal du véhicule est calculée à partir de la vitesse de rotation des roues arrière et des roues avant se trouvant dans le deuxième état d'absence de glissement.
- On obtient à partir d'au moins un organe d'actionnement de freinage par le conducteur un premier signal d'indication de freinage, apte à se trouver dans un premier état de freinage ou dans un deuxième état d'absence de freinage, et pour remplir les conditions des premier et deuxième modes de calcul le premier signal d'indication de freinage du conducteur doit en plus se trouver dans le deuxième état d'absence de freinage.
- On obtient à partir d'un système de régulation de freinage sur les roues avant et sur les roues arrière au moins un deuxième signal d'indication de freinage sur les roues avant, apte à se trouver dans un premier état de freinage ou dans un deuxième état d'absence de freinage, et au moins un troisième signal d'indication de freinage sur les roues arrière, apte à se trouver dans un premier état de freinage ou dans un deuxième état d'absence de freinage,
- pour remplir les conditions du premier mode de calcul, à la fois le couple sur les roues avant est inférieur à un premier seuil positif prescrit et supérieur à un deuxième seuil négatif prescrit, le deuxième signal d'indication de freinage sur les roues avant se trouve dans le deuxième état d'absence de freinage, le couple sur les roues arrière est supérieur à un troisième seuil positif prescrit ou inférieur à un quatrième seuil négatif prescrit, ou le troisième signal d'indication de freinage sur les roues arrière se trouve dans le premier état de freinage,
- pour remplir les conditions du deuxième mode de calcul, à la fois le couple sur les roues arrière est inférieur à un cinquième seuil positif prescrit et supérieur à un sixième seuil négatif prescrit, le troisième signal d'indication de freinage sur les roues arrière se trouve dans le deuxième état d'absence de freinage, le couple sur les roues avant est supérieur à un septième seuil positif prescrit ou inférieur à un huitième seuil négatif prescrit, ou le deuxième signal d'indication de freinage sur les roues avant se trouve dans le premier état de freinage.
- Les seuils sont fixés de manière proportionnelle à une répartition de poids prédéterminée du véhicule sur au moins un essieu avant supportant les roues avant et sur au moins un essieu arrière supportant les roues arrière.
- On fait la moyenne arithmétique des vitesses de rotation de roue retenues dans les modes de calcul, multipliée par un rayon prescrit de roue, pour calculer la vitesse de déplacement longitudinal du véhicule.

Un deuxième objet de l'invention est un dispositif pour la mise en oeuvre du procédé tel que décrit ci-dessus, destiné à être embarqué sur un véhicule automobile sur roues, caractérisé en ce qu'il comprend :

au moins un capteur de la vitesse de rotation de chaque roue du véhicule,
un moyen d'obtention d'une vitesse de déplacement longitudinal du véhicule,
un moyen de calcul du glissement de chaque roue à partir de la vitesse de rotation de la roue et de la vitesse de déplacement longitudinal obtenue,
un moyen de calcul, pour chaque roue, à partir au moins de la vitesse de rotation de roue mesurée et d'au moins une autre grandeur d'une dérivée de glissement de la roue,

un moyen de calcul d'un signal de non - fiabilité des glissements des roues, prenant un premier état d'absence de fiabilité dans le cas où, pour toutes les roues, un indicateur de glissement est dans un premier état de glissement, et au moins un deuxième état sinon,

- un moyen de génération de l'indicateur de glissement de chaque roue, pour que
- dans le cas où le signal de non - fiabilité est dans le deuxième état, l'indicateur de glissement de roue prend le premier état de glissement, lorsque la dérivée de glissement de la roue est supérieure à un premier seuil positif prescrit ou lorsque la dérivée de glissement de la roue est inférieure à un deuxième seuil négatif prescrit ou lorsque le glissement de la roue est supérieur à un troisième seuil positif prescrit ou lorsque le glissement de la roue est inférieur à un quatrième seuil négatif prescrit, et prend sinon un deuxième état d'absence de glissement de la roue,
- dans le cas où le signal de non - fiabilité est dans le premier état, l'indicateur de glissement de roue prend le premier état de glissement lorsque la dérivée de glissement de la roue est supérieure à un cinquième seuil positif prescrit ou lorsque la dérivée de glissement de la roue est inférieure à un sixième seuil négatif prescrit.

L'invention sera mieux comprise à la lecture de la description qui va suivre, donnée uniquement à titre d'exemple non limitatif en référence aux dessins annexés, sur lesquels :

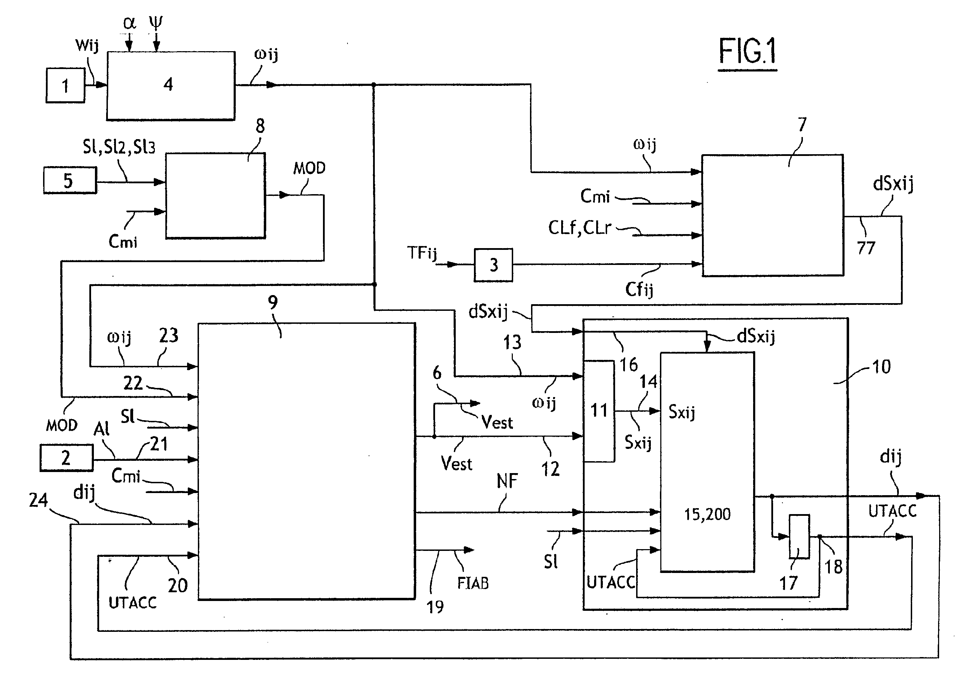

- la figure 1 représente un synoptique modulaire d'un dispositif pour la mise en oeuvre du procédé suivant l'invention,
- la figure 2 est une vue schématique de dessus d'un véhicule, sur lequel est mis en oeuvre le procédé suivant l'invention,
- la figure 3 est un synoptique modulaire d'un dispositif pour calculer une dérivée de glissement, utilisée dans le procédé suivant l'invention,
- les figures 4 et 5 représentent un mode de réalisation d'un moyen de génération d'un indicateur de glissement,
- les figures 6 à 8 représentent un mode de réalisation d'un moyen de réhabilitation de l'indicateur de glissement,
- la figure 9 représente un chronogramme de différents signaux apparaissant dans le dispositif en ordonnée, en fonction du temps en abscisse.

L'invention est décrite ci-dessous pour un véhicule automobile roulant sur deux roues avant et deux roues arrière, les deux roues avant étant par exemple motrices, les deux roues arrière pouvant éventuellement également être motrices. Sur chaque roue est prévu un capteur 1 de vitesse de rotation, apte à fournir en sortie une mesure W de vitesse de rotation de la roue associée.

Dans ce qui suit, chacune des quatre roues du véhicule, ainsi que les grandeurs associées à cette roue R, sont désignées par un couple d'indice ij selon la convention suivante :

- 11 ou fl désigne la roue avant gauche,
- 12 ou fr désigne la roue avant droite,
- 21 ou rl désigne la roue arrière gauche,
- 22 ou rr désigne la roue arrière droite.

Le sens longitudinal s'entend dans le sens avant-arrière.

Le procédé suivant l'invention est mis en oeuvre dans un dispositif, comprenant par exemple un ou plusieurs calculateurs numériques pour effectuer les traitements et calculs.

Le dispositif comporte les entrées suivantes :

- les vitesses Wij de rotation des roues ij,
- le ou les couples moteurs (Cmi) sur le ou les essieux de traction du véhicule,
- le couple Cfij de freinage sur chaque roue ij,
- le rapport Clf = CLf_status, Clr = CLr_status de boîte de vitesses,
- un signal SI d'indication de l'actionnement des freins ou de l'absence de l'actionnement des freins,
- une accélération longitudinale Al.

L'accélération longitudinale Al est fournie par la mesure d'un capteur 2 embarqué sur le véhicule.

Le couple Cmi de traction et le rapport Clf, CLr de boîte de vitesses sont fournis par un calculateur moteur non représenté, ainsi que cela est connu de l'homme du métier.

Le couple Cfij de freinage est calculé à partir des pressions Tfij de freinage pour chaque roue, par un estimateur 3 par exemple du type ABS ou ESP.

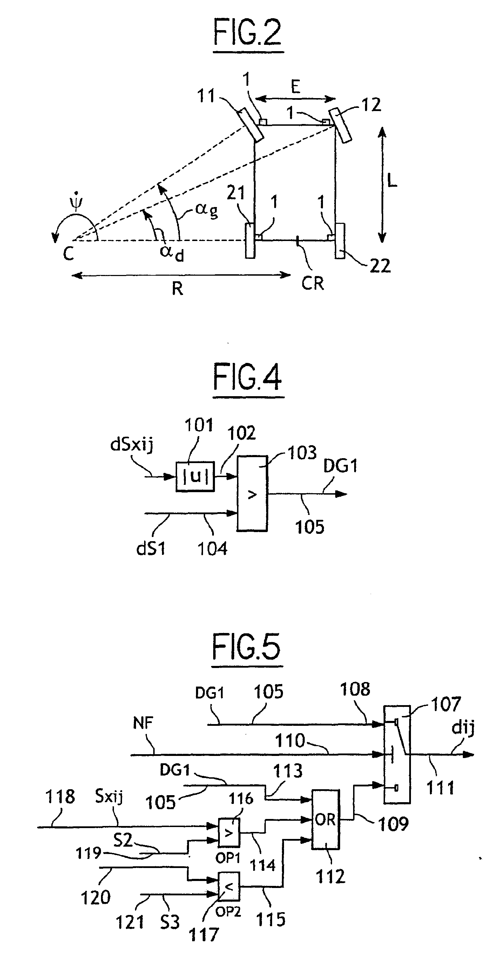

Un module 4 est prévu pour traiter les vitesses Wij de rotation des roues fournies par les capteurs 1, afin de corriger la différence de vitesse entre les roues dans les virages. Ce module 4 calcule pour chaque roue la vitesse ramenée au centre de l'essieu arrière constituant un centre CR de rotation pour des roues directrices situées à l'avant, ainsi que cela est représenté à la figure 2. Les vitesses de rotation ainsi traitées sont les suivantes :

$$\omega_{fl} = W_{fl} \frac{|R|}{\sqrt{\left(R + \dfrac{E}{2}\right)^2 + L^2}} \qquad \omega_{fr} = W_{fr} \frac{|R|}{\sqrt{\left(R - \dfrac{E}{2}\right)^2 + L^2}}$$

$$\omega_{rl} = \left(W_{rl} + \psi \frac{E}{2r}\right) \qquad \omega_{rr} = \left(W_{rr} + \psi \frac{E}{2r}\right)$$

avec

$\omega_{ij}$ :    Vitesse roue ij centrée
$\psi$ :    Vitesse de lacet
$R$ :    Rayon du virage
$L$ :    Empattement du véhicule
$W_{ij}$ :    Information vitesse roue issue du capteur
$E$ :    Voie du véhicule
$r$ :    Rayon roue

Le rayon R du virage est calculé à partir de la vitesse de lacet et de l'angle $\alpha$ de braquage des roues, c'est-à-dire $\alpha_d$ pour la roue avant droite et $\alpha g$ pour la roue avant gauche. Cet angle $\alpha_d$, $\alpha_g$ de volant et la vitesse de lacet sont mesurés par des capteurs embarqués sur le véhicule.

Les vitesses $\omega_{ij}$ qui sont utilisées par la suite ont par exemple été filtrées par un filtre passe-bas.

Un estimateur 7 est prévu pour calculer une dérivée dSxij du glissement de la roue ij à partir de la vitesse de rotation $\omega_{ij}$ de la roue, des couples moteurs $C_{mi}$, des couples de freinage Cfij (ou des pressions de freinage Tfij), du rapport de boîte de vitesses engagées CLf, CLr, qui forment des entrées reçues sur un bloc 71 d'entrée de l'estimateur 7.

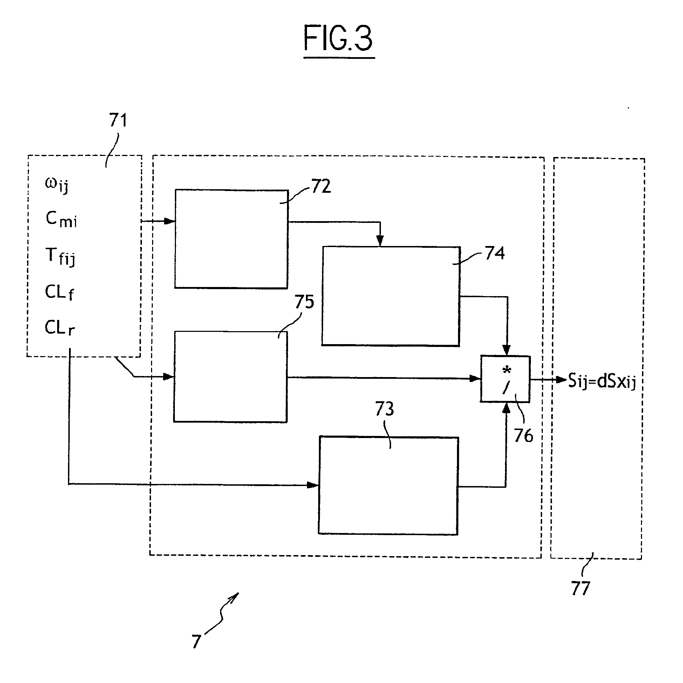

Un mode de réalisation de cet estimateur 7 est décrit ci-dessous en référence à la figure 3.

Le bloc 72 effectue une dérivation discrète et un filtrage de la vitesse de chaque roue et fournit une estimation de l'accélération de chaque roue.

Le bloc 73 effectue une estimation de la valeur du couple appliqué à chaque roue en tenant compte de la pression de freinage, du rapport de boîte de vitesses engagé et de l'état de l'embrayage.

Le bloc 75 effectue une estimation de l'inertie des roues pour chacun des essieux avant et arrière du véhicule.

Le bloc 74 qui est relié au bloc 72 effectue une transformation géométrique de l'estimation de l'accélération de chaque roue effectuée par le bloc 72.

Le bloc 76 effectue l'estimation de la dérivée du glissement de chaque roue, à partir des valeurs estimées par les blocs 74, 75 et 73.

On détaillera ci-après les calculs effectués par chacun des blocs ci-dessus.

On notera également Jij l'inertie équivalente à la roue, r le rayon de la roue, N le rapport de réduction globale, Tm$_j$ le couple moteur sur les essieux du véhicule (i=f, r pour représenter le couple moteur à l'essieu avant (front) ou arrière (rear) du véhicule), P$_{ij}$ les pressions de frein à la roue (i=f, r et j=d, g pour représenter une roue droite ou gauche du véhicule), F$_{ij}$ les efforts extérieurs appliqués à la roue, M la masse du véhicule, et V la vitesse du véhicule.

Dans le bloc 72, l'accélération de chaque roue est obtenue par dérivation discrète et filtrage de la vitesse de roue.

Dans le bloc 73, le couple moteur appliqué à chaque roue peut être obtenu à partir des informations issues des actionneurs ou par estimation.

Pour un actionneur électrique, le couple fourni est bien maîtrisé et peut être estimé grâce aux mesures de courant électrique et de régime moteur. Pour un moteur thermique, une estimation du couple moteur donne une information sur le couple fourni avec un degré de précision moyen mais suffisant.

Ensuite, le couple à chaque roue est calculé en prenant en considération le rapport de boîte ou l'état des embrayages (ou crabot) entre l'actionneur et les roues. Le différentiel est modélisé simplement mais il est envisageable d'améliorer le calcul du couple à la roue en utilisant un modèle de différentiel plus sophistiqué.

Dans la suite $Cm_{ij}$ représente le couple moteur à la roue (i=f, r pour représenter le couple moteur à l'essieu avant ou arrière du véhicule, j=r, l pour représenter une roue droite ou gauche du véhicule), $Pf_{ij}$ les pressions de frein à la roue (i, j décrit précédemment) et $Cf_{ij}$ les couples de frein correspondant.

Une illustration de l'invention consiste à calculer le couple à la roue grâce à l'expression suivante (différentiel parfait).

Pour le couple aux roues avant droit et gauche :

$$Cm_{fr}=1/2 \ \ CLf\_status \times Tm_f$$

$$Cm_{fl}=1/2 \ \ CLf\_status \times Tm_f$$

$$Cf_{fr}=Efficacite\_Avant \times P_{fr}$$

$$Cf_{fl}=Efficacite\_Avant \times P_{fl}$$

Pour le couple aux roues arrières droite et gauche :

$$Cm_{rd}=1/2 \ \ CLr\_status \times Tm_r$$

$$Cm_{rg}=1/2 \ \ CLr\_status \times Tm_r$$

$$Cf_{rd}=Efficacite\_Arrière \times P_{rr}$$

$$Cf_{rg}=Efficacite\_Arrière \times P_{rl}$$

« Efficacité_Arrière et Efficacité_Avant» désignent les efficacités des freins (grandeur connue et identifiée par ailleurs) et Cli_status (i=f, r pour front, rear) le rapport engagé, cette valeur étant égale à 0, lorsque l'embrayage est ouvert.

Des variantes sont possibles pour améliorer l'estimation des couples moteurs et freins notamment pour :

- prendre en compte les variations de l'efficacité des freins à l'aide de techniques d'observations et
- mieux représenter le différentiel.

Le bloc 75 estime l'inertie des roues d'un même essieu, par exemple $J_{fi}$ pour l'essieu avant cette inertie est fonction de l'inertie moteur $J_{mot}$ et de l'inertie pont+roue $J_{pont}$ selon l'équation suivante :

$$J_{fi} = \frac{J_{pont} + CL_i\_status^2 \cdot J_{mot}}{2}$$

avec CLi_status (f, r pour front, rear) le rapport engagé (0 si l'embrayage est ouvert).

Le bloc 74 effectue une transformation géométrique.

Dans le contexte d'un véhicule à 2 ou 4 roues motrices, les équations suivantes sont vérifiées pour chaque roue du véhicule :

$$J_{ij} \cdot \frac{\delta \omega_{ij}}{\delta t} = Cm_{ij} - Cf_{ij} - rF_{ij} \quad \text{avec} \quad i=f,l \quad j=l,r \qquad (1)$$

$$M \cdot \frac{\delta V}{\delta t} = \sum_{i,j} F_{ij} - C_x v^2 \qquad (2)$$

On supposera que la contribution de la force aérodynamique (- $C_x V^2$) est négligeable dans le calcul de la dynamique de glissement. De ce fait le terme aérodynamique disparaît dans la suite du calcul.

On appelle Sxij le glissement de la roue ij défini de la façon suivante :

$$Sx_{ij} = r.\omega_{ij} - V$$

En multipliant les deux termes de l'équation (2) par le rayon de la roue r et en sommant terme à terme l'équation ainsi obtenue avec l'équation (1), on obtient l'équation suivante :

$$r \cdot M \cdot \frac{\delta V}{\delta t} + \sum_{i,j} J_{ij} \cdot \frac{\delta \omega_{ij}}{\delta t} = \sum_{i,j} (Cm_{ij} - Cf_{ij}) \qquad (3)$$

En dérivant par rapport au temps t les deux termes de l'équation (3) on obtient :

$$\frac{\delta V}{\delta t} = r \frac{\delta \omega_{ij}}{\delta t} - \frac{\delta Sx_{ij}}{\delta t} \qquad (4)$$

On peut maintenant remplacer le terme $\frac{\delta V}{\delta t}$ de l'équation (4) avec l'expression au second terme de l'équation (5) pour tout couple d'indice ij. On obtient ainsi les quatre équations suivantes pour les quatre roues.

$$\begin{cases} (J_{11} + M \cdot r^2) \dfrac{\delta \omega_{11}}{\delta t} - \dfrac{\delta Sx_{11}}{\delta t} \cdot M \cdot r + \sum_{ij \neq 11} J_{ij} \cdot \dfrac{\delta \omega_{ij}}{\delta t} = \sum_{i,j} (Cm_{ij} - Cf_{ij}) \\[3mm] (J_{12} + M \cdot r^2) \dfrac{\delta \omega_{12}}{\delta t} - \dfrac{\delta Sx_{12}}{\delta t} \cdot M \cdot r + \sum_{ij \neq 12} J_{ij} \cdot \dfrac{\delta \omega_{ij}}{\delta t} = \sum_{i,j} (Cm_{ij} - Cf_{ij}) \\[3mm] (J_{21} + M \cdot r^2) \dfrac{\delta \omega_{21}}{\delta t} - \dfrac{\delta Sx_{21}}{\delta t} \cdot M \cdot r + \sum_{ij \neq 21} J_{ij} \cdot \dfrac{\delta \omega_{ij}}{\delta t} = \sum_{i,j} (Cm_{ij} - Cf_{ij}) \\[3mm] (J_{22} + M \cdot r^2) \dfrac{\delta \omega_{22}}{\delta t} - \dfrac{\delta Sx_{22}}{\delta t} \cdot M \cdot r + \sum_{ij \neq 22} J_{ij} \cdot \dfrac{\delta \omega_{ij}}{\delta t} = \sum_{i,j} (Cm_{ij} - Cf_{ij}) \end{cases}$$

L'estimation de la dérivée du glissement pour chacune des quatre roues est alors donnée par :

$$\left\{ \begin{array}{l} \dfrac{\delta Sx_{11}}{\delta t} = \left[ (J_{11} + M \cdot r^2) \dfrac{\delta \omega_{11}}{\delta t} + \sum_{ij \neq 11} J_{ij} \cdot \dfrac{\delta \omega_{ij}}{\delta t} - \sum_{i,j} (Cm_{ij} - Cf_{ij}) \right] \dfrac{1}{M \cdot r} \\[4mm] \dfrac{\delta Sx_{12}}{\delta t} = \left[ (J_{12} + M \cdot r^2) \dfrac{\delta \omega_{12}}{\delta t} + \sum_{ij \neq 12} J_{ij} \cdot \dfrac{\delta \omega_{ij}}{\delta t} - \sum_{i,j} (Cm_{ij} - Cf_{ij}) \right] \dfrac{1}{M \cdot r} \\[4mm] \dfrac{\delta Sx_{21}}{\delta t} = \left[ (J_{21} + M \cdot r^2) \dfrac{\delta \omega_{21}}{\delta t} + \sum_{ij \neq 21} J_{ij} \cdot \dfrac{\delta \omega_{ij}}{\delta t} - \sum_{i,j} (Cm_{ij} - Cf_{ij}) \right] \dfrac{1}{M \cdot r} \\[4mm] \dfrac{\delta Sx_{22}}{\delta t} = \left[ (J_{22} + M \cdot r^2) \dfrac{\delta \omega_{22}}{\delta t} + \sum_{ij \neq 22} J_{ij} \cdot \dfrac{\delta \omega_{ij}}{\delta t} - \sum_{i,j} (Cm_{ij} - Cf_{ij}) \right] \dfrac{1}{M \cdot r} \end{array} \right.$$

On note dans cette expression que le calcul de la dérivée du glissement est exact, difiérente pour une roue droite et une roue gauche et ne dépend plus des efforts extérieurs.

La sortie du système (bloc 77) est notée $\dfrac{\partial S_{x_{ij}}}{\partial t} = \dot{S}x_{ij} = \text{dSxij,}$ ce qui représente l'estimation de la dérivée du glissement.

Les essais ont montré qu'il existait un écart très faible entre la valeur calculée de la dérivée du glissement et la valeur réelle de cette dérivée.

Ainsi, l'unité de calcul selon l'invention peut être utilisée pour contrôler de façon très précise notamment un dispositif d'anti-blocage des roues et/ou un dispositif d'anti-patinage des roues d'un véhicule automobile.

L'estimateur 7 met ainsi en oeuvre un procédé pour estimer la dérivée du glissement des roues d'un véhicule automobile équipé de deux ou quatre roues motrices et d'une unité de calcul pour mettre en oeuvre ce procédé, comprenant les étapes suivantes :

a) la saisie de données sur la vitesse des roues, des couples moteurs appliqués sur les roues, des pressions de freinage, du rapport de boîte de vitesses engagé,

b) l'estimation de l'accélération de chaque roue en effectuant une dérivation discrète et un filtrage de la vitesse de chaque roue,

c) l'estimation du couple appliqué à chaque roue en tenant compte, de la pression de freinage, du rapport de boîte de vitesses engagé et de l'état de l'embrayage,

d) l'estimation de l'inertie des roues pour chacun des essieux avant et arrière du véhicule,

e) la mise en oeuvre d'une transformation géométrique de l'estimation de l'accélération de chaque roue estimée en b),

f) l'estimation de la dérivée du glissement de chaque roue, à partir des valeurs estimées en c), d) et e).

Un module 8 est prévu pour déterminer un mode de calcul de la vitesse longitudinale du véhicule pour fournir sur une sortie un signal MOD d'indication de mode de calcul.

Ce module 8 comporte les entrées suivantes :

$C_{m1} = T_{mot\_AV}$ : Couple fourni par le moteur avant ($C_{ml}$ pour i = 1 à l'avant) ;
$C_{m2} = T_{mot\_AR}$ : Couple fournir par le moteur arrière ($C_{ml}$ pour i = 2 à l'arrière) ;
$Sl = Frein_{conducteur}$ : ce signal est obtenu de la façon suivante :

1 si le conducteur appuie sur la pédale de frein
0 sinon ;

$Sl2 = Frein_{ESP\_AV}$ : ce signal est obtenu de la façon suivante :

1 si au moins une roue avant est freinée par une régulation du type ABS/ASR/ESP
0 sinon ;

*SI3 = Frein$_{ESP\_AR}$* : Ce signal est obtenu de la façon suivante :

> 1 si au moins une roue arrière est freinée par une régulation du type ABS/ASR/ESP
> 0 sinon.

Un module 5 représente globalement l'entité fournissant SI, SI1, SI2.

Le moteur avant est le moteur entraînant les roues avant. Dans le cas où les roues arrière sont entraînées par un moteur et où les roues avant ne sont pas entraînées, $T_{mot\_AV} = 0$.

Le moteur arrière est le moteur entraînant les roues arrière. Dans le cas où les roues avant sont entraînées par un moteur et où les roues arrière ne sont pas entraînées, $T_{mot\_AR} = 0$.

Dans le cas où à la fois les roues avant et les roues arrière sont entraînées par un même moteur ou par deux moteurs différents, $T_{mot\_AV}$ et $T_{mot\_AR}$ sont pris en compte, comme par exemple dans le cas d'un véhicule 4x4.

Dans un mode de réalisation, le signal MOD de mode de calcul de la vitesse longitudinale prend l'un parmi trois états 1, 2, 3, de la manière suivante :

MOD = 2 SI

$$\left[\begin{array}{llllll} |T_{mot-AV}| \langle Seuil_{mot-AV} & ET & Frein_{conducteur} = 0 & ET & Frein_{ESP-AV} = 0 & ET \\ (|T_{mot-AR}| \rangle Seuil_{mot-AR} & OU & Frein_{ESP-AR} = 1) & & & \end{array}\right]$$

MOD = 3 SI

$$\left[\begin{array}{llllll} |T_{mot-AR}| \langle Seuil_{mot-AR} & ET & Frein_{conducteur} = 0 & ET & Frein_{ESP-AR} = 0 & ET \\ (|T_{mot-AV}| \rangle Seuil_{mot-AV} & OU & Frein_{ESP-AV} = 1) & & & \end{array}\right]$$

MOD = 1 SINON.

En outre, en cas de glissement Sx négatif en situation de freinage du conducteur, MOD = 4 et Vest sera obtenue à partir du maximum des vitesses $\omega_{ij}$ des roues, multiplié par un rayon de roue.

En outre, en cas de glissement Sx positif en situation de non freinage du conducteur en traction, MOD = 5 et Vest sera obtenue à partir du minimum des vitesses $\omega_{ij}$ des roues, multiplié par un rayon de roue.

*Seuil$_{mot\_AV}$* et *Seuil$_{mot\_AR}$* représentent des valeurs seuils sur les couples moteurs avant et arrière. Ils peuvent être choisis de la façon suivante :

- on se fixe une valeur d'adhérence $\mu_{min}$,
- on suppose que le poids du véhicule $F_{z\_tot}$ est réparti de façon fixe sur les essieux avant et arrière :

$$\begin{cases} F_{z\_AV} = x . F_{z\_tot} \\ F_{z\_AR} = (1-x) F_{z\_tot} \end{cases} \qquad \textbf{avec} \qquad 0 \langle x \langle 1$$

On peut poser par exemple x = $^2/_3$.

Les seuils *Seuil$_{mot\_AV}$* et *Seuil$_{mot\_AR}$* sont alors fixés de la façon suivante :

$$\begin{cases} Seuil_{mot\_AV} = \mu_{min} . F_{z\_AV} . r \\ Seuil_{mot\_AR} = \mu_{min} . F_{z\_AR} . r \end{cases}$$

Les seuils $Seuil_{mot\_AV}$ et $Seuil_{mot\_AV}$ ainsi choisis représentent donc les couples moteurs minima (avant ou arrière) pour un coefficient d'adhérence $\mu_{min}$.

Avec cette méthode, le choix des seuils $Seuil_{mot\_AV}$ et $Seuil_{mot\_AR}$ revient à choisir la valeur de $\mu_{min}$. Pour une adhérence supérieure ou égale à $\mu_{min}$, un couple moteur (avant ou arrière) inférieur à $Seuil_{mot\_AV}$ ou $Seuil_{mot\_AV}$ est insuffisant pour faire glisser les roues.

Un estimateur 9 calcule une vitesse longitudinale estimée V=Vest du véhicule, également appelée vitesse de référence. La vitesse Vest est générée sur une sortie 6 de l'estimateur 9 et est en outre envoyé à une entrée 12 d'un estimateur 10.

Le principe de base de calcul de la vitesse de référence Vest est d'utiliser l'information des vitesses des roues qui ne glissent pas.

Cet estimateur 9 comporte les entrées suivantes :

- une entrée 22 pour le signal MOD de mode de calcul issu du module 8,
- des entrées 23 pour les vitesses de rotation $\omega_{ij}$ des roues,
- pour les différentes roues ij, des entrées 24 pour l'indicateur dij de glissement de la roue ij, qui prend un premier état dij = 1 de glissement si la roue est glissante, par exemple dans le cas d'un patinage ou d'un blocage, ou un deuxième état dij = 0 d'absence de glissement de la roue ij si l'état de la roue est normal, c'est-à-dire si sa vitesse est cohérente avec la vitesse du véhicule,
- une entrée 20 pour un signal UTACC d'utilisation d'accélération,
- une entrée 21 pour l'accélération AL issue du capteur 2.

Le signal Vest est obtenu de la façon suivante :

. SI MOD = 1 alors

$$V_{est}(t) = \begin{cases} r \cdot \dfrac{\sum\limits_{i,j} \omega_{ij} \cdot (1 - d_{ij})}{\sum\limits_{i,j} (1 - d_{ij})} & si \quad \sum\limits_{i,j} (1 - d_{ij}) \neq 0 \\[2em] V_{est}(t-1) \end{cases}$$

. SI MOD = 2 alors

$$V_{est}(t) = \begin{cases} r \cdot \dfrac{\sum\limits_{j} \omega_{1,j} \cdot (1 - d_{1,j})}{\sum\limits_{j} (1 - d_{1,j})} & si \quad \sum\limits_{j} (1 - d_{1,j}) \neq 0 \\[2em] r \cdot \dfrac{\sum\limits_{j} \omega_{2,j} \cdot (1 - d_{2,j})}{\sum\limits_{j} (1 - d_{2,j})} & si \quad \left( \sum\limits_{j} (1 - d_{1,j}) = 0 \quad ET \quad \sum\limits_{j} (1 - d_{2,j}) \neq 0 \right) . \\[2em] V_{est}(t-1) & sinon \end{cases}$$

SI      MOD = 3 alors

$$V_{est}(t) = \begin{cases} r \cdot \dfrac{\sum_j \omega_{2,j} \cdot (1 - d_{2,j})}{\sum_j (1 - d_{2,j})} & si \quad \sum_j (1 - d_{2,j}) \neq 0 \\[4mm] r \cdot \dfrac{\sum_j \omega_{1,j} \cdot (1 - d_{1,j})}{\sum_j (1 - d_{1,j})} & si \quad \left( \sum_j (1 - d_{2,j}) = 0 \quad ET \quad \sum_j (1 - d_{1,j}) \neq 0 \right) \\[4mm] V_{est}(t - 1) & sinon \end{cases}$$

Les considérations qui sont à la base de cette estimation sont les suivantes :

1. Les roues soumises à un faible couple (le signal MOD contient cette information) sont les mieux adaptées à estimer la vitesse longitudinale du véhicule. On appelle ici "faible couple" un couple insuffisant à faire glisser les roues si l'adhérence est supérieure à la valeur $\mu_{min}$ choisie. Si par exemple le couple à l'essieu arrière du véhicule est nul (véhicule en mode traction avant) et que le conducteur du véhicule ne freine pas et qu'il n'y a pas d'intervention des systèmes actifs de sécurité alors MOD = 3 et on utilisera de préférence les vitesses des roues arrière pour estimer la vitesse de référence.

2. Les roues caractérisées par un *dij* = 1 (roues estimées glissantes) ne doivent pas être utilisés pour l'estimation ;

3. Une moyenne arithmétique des vitesses des roues préconisées au point 1. et autorisées au point 2. fournit la meilleure estimation de la vitesse longitudinale du véhicule :

4. Si les 4 roues glissent, on ne peut pas estimer la vitesse longitudinale du véhicule avec l'information de vitesse roues $\omega$ij.

Le fait que toutes les roues glissent est détecté par le fait qu'un signal UTACC d'utilisation d'accélération est dans un premier état d'utilisation d'accélération. Dans ce cas, la vitesse longitudinale Vest sera estimée en intégrant l'accélération longitudinale Al, des moyens étant prévus à cet effet dans l'estimateur 9.

Un moyen est également prévu, par exemple dans l'estimateur 9, pour fournir sur une sortie 19 un signal FIAB d'indication de fiabilité de la valeur $V_{est}$ de vitesse longitudinale et du glissement $S_{xij}$ des roues.

Dans un mode de réalisation, ce signal FIAB est binaire et obtenu de la façon suivante :

$$FIAB(t) = \begin{cases} 1 & si \quad \sum_{i,j} (1 - d_{ij}) \neq 0 \\[3mm] 0 & sinon \end{cases}$$

le signal fiabilité ne peut prendre alors que deux valeurs :

- 0 : $V_{est.}$ n'est pas fiable, donc les quatre roues sont considérées glissantes (dij = 1 pour toutes les roues),
- 1 : $V_{est}$ est fiable, donc au moins une roue ne glisse pas.

Un autre mode de réalisation est le suivant :

$$FIAB(t) = \begin{cases} 0 & si & \sum_{i,j}(1-d_{ij}) = 0 \\ 2 & si & \begin{pmatrix} \sum_{i,j}(1-d_{ij}) = 4 & OU & (MOD = 2 & ET & \sum_{j}(1-d_{ij}) = 2) \\ OU\ (MOD = 3 & ET & \sum_{j}(1-d_{2j}) = 2) \end{pmatrix} \\ 1 & sinon \end{cases}$$

Le signal fiabilité peut prendre alors trois valeurs :

- 0 : $V_{est}$ n'est pas fiable, donc les quatre roues sont considérées glissantes ($d_{ij} = 1\ \forall_{ij}$).
- 2 : $V_{est}$, est "très" fiable, donc les quatre roues ne glissent pas ou les deux roues d'un même essieu sont soumises à un faible couple et ne glissent pas.
- 1 : $V_{est}$, est "assez" fiable.

Dans un mode de réalisation, il est prévu, par exemple dans l'estimateur 9, un moyen pour calculer un signal NF d'indication de non fiabilité des glissements $S_{xij}$ des roues en fonction des indicateurs dij de glissement des roues ij de la manière suivante :

NF = 1 (1 étant un état d'absence de fiabilité) si pour toutes les roues, dij = 1, correspondant au fait que toutes les roues glissent,
NF = 0 sinon, correspondant à un deuxième état de présence de fiabilité.

Le signal NF prend l'état 1 d'absence de fiabilité lorsque l'on ne veut pas prendre en compte le signal Sxij pour détecter le glissement d'une roue.

Un estimateur 10 est prévu pour calculer les indicateurs dij de glissement des roues ij. L'estimateur 10 comporte les entrées suivantes :

- la dérivée dSxij de glissement des roues ij,
- la vitesse longitudinale estimée $V_{est}$, également appelée vitesse de référence Vest,
- le signal NF d'absence de fiabilité.

Un moyen 11 est prévu, par exemple dans l'estimateur 10, pour calculer le glissement absolu $S_{xij}$ de la roue ij suivant la formule :

$$S_{xij} = V_{roue\ ij} - Vest$$

avec

$$V_{roue\ ij} = r.\ \omega_{ij},$$

Vest et ωij étant en entrées 12, 13 du module 11, Sxij étant en sortie 14 du moyen 11.
$V_{roue\ ij}$ représente la vitesse linéaire de la roue ij.

Dans le module 10, la dérivée $dS_{xij}$ de glissement est éventuellement filtrée dans un filtre passe-bande. Le signal issu de ce filtrage passe-bande étant ensuite utilisé.

Dans le cas où le signal NF est dans l'état NF = 0 de présence de fiabilité, l'indicateur dij de glissement de roue est mis dans le premier état dij=1 de glissement lorsque les conditions suivantes sont remplies :

$$\mathbf{si} \ \left(\left(\left|dSxij\right| \rangle dS1\right) \quad OU \quad \left(Sxij \rangle S2\right) \quad OU \quad \left(Sxij \langle S3\right)\right) \quad alors \ dij = 1.$$

Dans le cas où le signal NF se trouve dans l'état NF = 1 d'absence de fiabilité, l'indicateur dij de glissement est mis dans l'état de glissement dij = 1, lorsque les conditions suivantes sont remplies :

$$\mathbf{si} \ \left(\left|dSxij\right| \rangle dS4\right) \quad alors \ dij = 1.$$

dS1 est un seuil positif de détection de glissement pour dSx (un premier seuil positif pour les valeurs positives de dSxij et un deuxième seuil négatif pour les valeurs négatives de dSxij pourrait également être prévu),
S2 est un troisième seuil positif de glissement,
S3 est un quatrième seuil négatif de glissement,
dS4 est un seuil positif de dérivée de glissement (un premier seuil positif pour les valeurs positives de dSxij et un deuxième seuil négatif pour les valeurs négatives de dSxij pourrait également être prévu).

Les seuils dS1, S2, S3, dS4 sont prescrits à des valeurs constantes dans le module 10.
On décrit ci-dessous en référence aux figures 4 et 5 un mode de réalisation d'un moyen 15 de génération de l'indicateur dij de glissement, comportant une entrée 14 pour Sxij et une entrée 16 pour dSxij.
La dérivé dSxij de glissement est envoyée à l'entrée d'un moyen 101 de formation du module, dont la sortie est reliée à une première entrée 102 d'un comparateur 103, dont la deuxième entrée 104 est reliée au premier seuil dS1. Le comparateur 103 fournit sur sa sortie 105 un signal DG1 de détection de glissement prenant le premier état 1 de glissement dans le cas où le module de dSxij est supérieur à dS1 et le deuxième état 0 d'absence de glissement sinon.
Dans ce mode de réalisation, dS1 = dS4.
Un moyen 107 de commutation est prévu, comportant une entrée 110 de commande de commutation reliée au signal NF, pour commuter la sortie 111 de fourniture d'indicateur dij, soit sur une première entrée 108 reliée à la sortie 105 lorsque le signal NF est égal à 1, soit sur une deuxième entrée 109 lorsque le signal NF est égal à 0. L'entrée 109 est reliée à la sortie d'un opérateur logique OU 112, comportant une première entrée 113 reliée à la sortie 105, une deuxième entrée 114 reliée à la sortie d'un comparateur 116 et une troisième entrée 115 reliée à la sortie d'un comparateur 117.
Le comparateur 116 comporte une première entrée 118 reliée au signal Sxij de glissement et une deuxième entrée 119 reliée au seuil S2, pour fournir sur sa sortie 114 un état 1 de glissement lorsque le signal sur sa première entrée 118 est supérieur au signal sur sa deuxième entrée 119, et un état 0 d'absence de glissement sinon.
Le comparateur 117 comporte une première entrée 120 reliée au signal Sxij de glissement et une deuxième entrée 121 reliée au seuil S3, pour fournir sur sa sortie 115 un état 1 de glissement lorsque le signal sur sa première entrée 120 est supérieure au signal sur sa deuxième entrée 121, et un état 0 d'absence de glissement sinon.
Pour la réhabilitation d'une roue, on utilise les signaux Sxij et dSxij utilisés pour la détection de glissement. La grandeur dSxij est par exemple filtrée dans un filtre passe-bas. On définit en entrée le signal logique SI de freinage du conducteur, qui prend la valeur 1 de freinage lorsqu'on est en situation de freinage et prend la valeur 0 sinon.
On décrit ci-dessous des moyens de réhabilitation d'une roue pour faire passer l'indicateur dij de l'état 1 de glissement à l'état 0 d'absence de glissement lorsque certaines conditions sont respectées. On définit à partir des indicateurs dij dans leur état actuel un signal UTACC d'utilisation d'accélération pour le calcul de l'état suivant des indicateurs dij. Ce signal UTACC d'utilisation d'accélération est par exemple calculé par un module 17, par exemple de l'estimateur 10, comportant en entrées les indicateurs dij des roues, issus du module 15, et en sortie 18 le signal UTACC.
Lorsque pour toutes les roues, les indicateurs dij sont dans l'état 1 de glissement, le signal UTACC prend la valeur 1, ou sinon prend la valeur 0.
Dans le cas particulier où toutes les roues glissent et que le signal UTACC d'utilisation est à 1, la vitesse de référence est estimée dans le module 9 en intégrant la valeur d'accélération longitudinale Al fournie par le capteur 2, le module 9 comportant à cet effet un module intégrateur recevant cette accélération longitudinale Al.
Dans le cas où le signal UTACC est dans l'état 0 de non utilisation de l'accélération, l'indicateur dij est réhabilité dans l'état 0 d'absence de glissement de la manière suivante.

$$\mathbf{Si} \ \left(\left(SI = 1\right) et \left(\left|Sxij\right| \langle S11\right) \quad pendant \ T11\right)$$

alors dij=0.
Si

$$\Big(\big(Sl = 0\big)et\big(\big(|dSxij|\langle dS12\big)\quad pendant\ T121\big)\Big)$$

et

$$\Big(\big(|Sxij|\langle S13\big)\quad \text{à l'instant de fin de}\ T121\Big)$$

alors dij=0.

Dans le cas où le signal UTACC est dans l'état 1 d'utilisation de l'accélération, l'indicateur dij est réhabilité dans l'état 0 d'absence de glissement de la manière suivante :

$$\text{Si}\ \Big(\big(Sl = 1\big)et\big(\big(|dSxij|\langle dS12\big)\quad pendant\ T122\big)\Big)\quad alors\ dij = 0.$$

$$\text{Si}\ \Big(\big(Sl = 0\big)et\big(\big(|dSxij|\langle dS12\big)\quad pendant\ T121\big)\Big)\quad alors\ dij = 0.$$

dS12 est un seuil positif prescrit de réhabilitation pour la dérivée de glissement,

T121 est une durée prescrite pendant laquelle la valeur absolue du signal dSxj doit se trouver en dessous du seuil dS12. Cette temporisation peut être différente dans le cas d'un glissement négatif ou positif. Dans le cas d'un freinage, correspondant à un glissement négatif, une durée prescrite différente T122 est définie.

S11 est un seuil positif prescrit de réhabilitation pour le glissement, dans le cas d'un freinage du conducteur,

T11 est une durée prescrite pendant laquelle la valeur absolue du signal Sxij doit se trouver en-dessous du seuil S11,

S13 est un seuil positif prescrit de réhabilitation pour le glissement Sx, dans le cas où il n'y a pas de freinage du conducteur.

Comme précédemment, chaque seuil sur les modules ou valeurs absolues peut comprendre un seuil positif pour les valeurs positives et un seuil négatif pour les valeurs négatives.

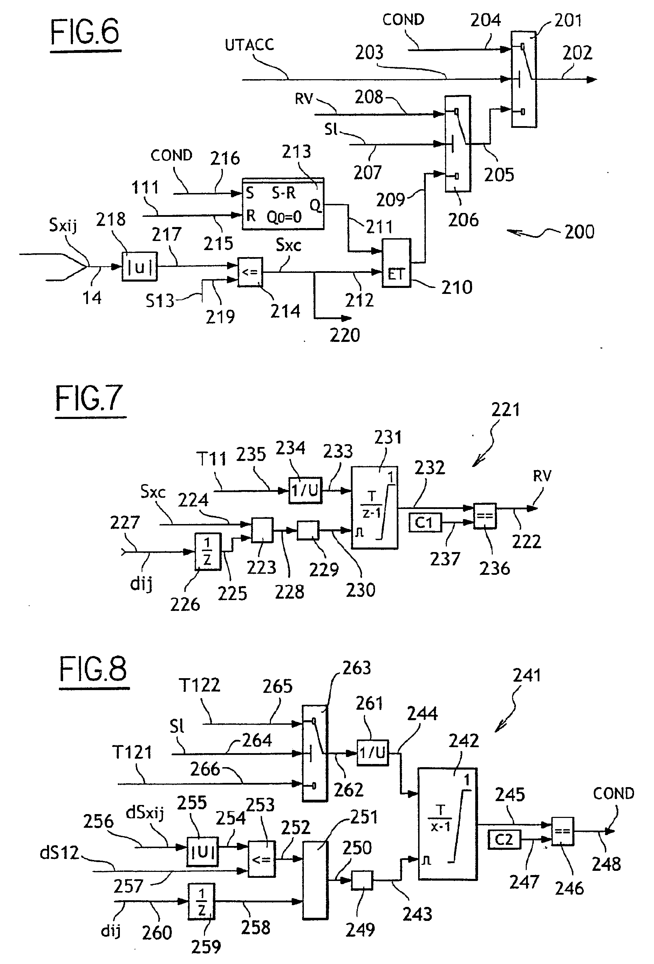

On décrit ci-dessous en référence aux figures 6 à 8 un mode de réalisation d'un moyen 200 de réhabilitation de l'indicateur dij dans l'état 0 d'absence de glissement.

Le moyen 200 de réhabilitation comporte un commutateur 201 comportant une sortie 202 de fourniture de l'indicateur dij = 0 de fin de glissement, et une entrée 203 de commande de commutation reliée au signal UTACC d'utilisation d'accélération pour commuter la sortie 202, soit sur une première entrée 204 dans le cas où l'accélération est utilisée (UTACC = 1), soit sur une deuxième entrée 205 dans le cas où l'accélération n'est pas utilisée (UTACC = 0). L'entrée 205 est reliée à la sortie d'un commutateur 206 comportant une entrée 207 de commande de commutation reliée au signal SI de freinage pour commuter l'entrée 205, soit sur une première entrée 208 du commutateur 206 dans le cas où le signal SL est à 1 en présence d'un freinage du conducteur, soit sur une deuxième entrée 209 du commutateur 206 dans le cas où le signal SL est à 0 en l'absence de freinage du conducteur. L'entrée 208 est reliée à un signal RV de réhabilitation sur la vitesse. L'entrée 209 est reliée à la sortie d'un opérateur logique ET 210, comportant une première entrée 211 reliée à la sortie Q d'état d'une bascule 213 de type RS et une deuxième entrée 212 reliée à la sortie d'un comparateur 214. La bascule 213 est à l'état initial Q0=0 et comporte une entrée 215 de réinitialisation reliée à la sortie 111 de détection de glissement et une entrée S 216 de réglage. Le comparateur 214 comporte une première entrée 217 reliée à la sortie d'un opérateur 218 formant la valeur absolue du signal Sxij de glissement appliqué sur son entrée 14 et une deuxième entrée 219 reliée au seuil S13. Les entrées 204 et 216 sont reliées à un signal COND de condition de réhabilitation sur dSxij. La sortie du comparateur 214 fournit sur l'entrée 212 ainsi que sur une dérivation 220 de celle-ci un signal Sxc d'indication de correction, qui est égal à 1 lorsque la valeur sur l'entrée 217 est inférieure ou égale à la valeur sur l'entrée 219, et qui est égal à 0 sinon.

A la figure 7 est représenté un moyen 221 de production, sur une sortie 222, du signal RV de réhabilitation sur la vitesse. Ce moyen 221 comporte un opérateur ET logique 223 comportant une première entrée 224 reliée au signal Sxc et une deuxième entrée 225 reliée à la sortie d'une unité 226 de retard recevant sur son entrée 227 l'indicateur dij. La sortie 228 de l'opérateur logique ET 223 est reliée à l'entrée d'un opérateur NON logique 229 dont la sortie est reliée à une première entrée 230 de remise à zéro d'un intégrateur 231 en temps discret, afin de remettre à zéro la valeur présente sur la sortie 232 de celui-ci lorsque l'entrée 230 est à 1. L'intégrateur 231 comporte une deuxième entrée 233 de signal à intégrer, reliée à la sortie d'un opérateur 234 inverseur de la valeur présente sur son entrée 235, elle-même reliée à la durée T11, afin de fournir au bout de cette durée T11 un signal égal à 1 sur la sortie 232 depuis que la valeur présente sur la première entrée 230 est égale à 0. La sortie 232 est reliée à une première entrée d'un opérateur logique 236 d'égalité recevant sur une deuxième entrée 237 une valeur constante C1, égale à 1 dans l'exemple précédent, pour fournir sur la sortie 222 le signal RV de réhabilitation sur la vitesse, qui est égal à 1 en cas d'égalité entre la valeur présente sur la première entrée 232 et la valeur C1 présente sur la deuxième entrée 237, et une valeur 0 sinon.

A la figure 8 est représenté un moyen 241 de production du signal COND de condition de réhabilitation sur la dérivée du glissement. Il comporte un intégrateur 242 du même type que l'intégrateur 231 décrit en référence à la figure 7, dont la première entrée de remise à zéro est désignée par 243, la deuxième entrée de signal à intégrer par 244, la sortie par 245, elle-même reliée à la première entrée d'un opérateur logique 246 d'égalité du même type que l'opérateur 236 et ayant sur sa deuxième entrée 247 une constante C2 par exemple égale à 1, cet opérateur 246 fournissant sur sa sortie 248 le signal COND. La première entrée 243 est reliée à la sortie d'un opérateur logique NON 249, dont l'entrée 250 est reliée à la sortie d'un opérateur logique ET 251. L'opérateur ET 251 comporte une première entrée 252 reliée à la sortie d'un comparateur 253, qui comporte une première entrée 254 reliée par un opérateur 255 de formation de la valeur absolue à une entrée 256 reliée au signal dSxij de dérivée de glissement, et une deuxième entrée 257 reliée au seuil dS12. L'opérateur ET 251 comporte également une deuxième entrée 258 reliée à la sortie d'une unité 259 de retard, dont l'entrée 260 est reliée à l'indicateur dij. La deuxième entrée 244 de signal à intégrer de l'intégrateur 242 est reliée à la sortie d'un opérateur 261 de formation de la valeur inverse dont l'entrée 262 est reliée à la sortie d'un commutateur 263. Le commutateur 263 comporte une entrée 264 de commande de commutation, reliée au signal SI de freinage, pour commuter la sortie 262, soit sur une première entrée 265 reliée à la durée T122 en cas de freinage du conducteur lorsque le signal SI est égal à 1, soit sur une deuxième entrée 266 reliée à la durée T121 en absence de freinage du conducteur lorsque le signal SI est égal à 0.

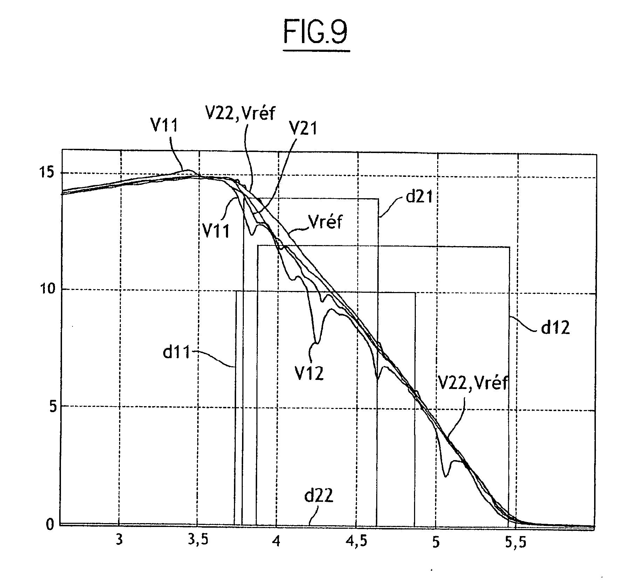

La figure 9 représente un exemple des différents signaux de vitesse linéaire de roue V11, V12, V21, V22, des signaux dij = d11, d12, d21, d22 et de la vitesse estimée Vest=Vref, mentionnés ci-dessus, en fonction du temps.

## Revendications

1. Procédé d'estimation d'une vitesse de référence d'un véhicule automobile sur roues, à l'aide d'au moins un calculateur embarqué sur le véhicule, dans lequel on mesure par au moins un capteur (1) la vitesse (Wij) de rotation de chaque roue (ij) du véhicule, une vitesse (Vest) de déplacement longitudinal du véhicule étant obtenue,

   **caractérisé en ce que**

   on calcule pour chaque roue le glissement (Sxij) de la roue à partir de la vitesse (Wij) de rotation de la roue et de la vitesse (Vest) de déplacement longitudinal obtenue,

   on calcule pour chaque roue à partir au moins de la vitesse (Wij) de rotation de roue mesurée et d'au moins une autre grandeur une dérivée (dSxij) de glissement de la roue,

   on calcule un signal (NF) de non - fiabilité des glissements des roues, prenant un premier état (NF=1) d'absence de fiabilité dans le cas où, pour toutes les roues, un indicateur (dij) de glissement est dans un premier état de glissement (dij=1), et au moins un deuxième état sinon,

   - dans le cas où le signal (NF) de non - fiabilité est dans le deuxième état, pour chaque roue, l'indicateur (dij) de glissement de roue prend le premier état (dij=1) de glissement, lorsque la dérivée (dSxij) de glissement de la roue est supérieure à un premier seuil positif prescrit (dS1) ou lorsque la dérivée (dSxij) de glissement de la roue est inférieure à un deuxième seuil négatif prescrit (dS1) ou lorsque le glissement (Sxij) de la roue est supérieur à un troisième seuil positif prescrit (S2) ou lorsque le glissement (Sxij) de la roue est inférieur à un quatrième seuil négatif prescrit (S3), et prend sinon un deuxième état (dij=0) d'absence de glissement de la roue,
   - dans le cas où le signal (NF) de non - fiabilité est dans le premier état (NF=1), l'indicateur (dij) de glissement de roue prend le premier état (dij=1) de glissement lorsque la dérivée (dSxij) de glissement de la roue est supérieure à un cinquième seuil positif prescrit (dS4) ou lorsque la dérivée (dSxij) de glissement de la roue est inférieure à un sixième seuil négatif prescrit (dS4).

2. Procédé d'estimation suivant la revendication 1, **caractérisé en ce que** l'on obtient à partir d'au moins un organe d'actionnement de freinage par le conducteur un signal (SI) d'indication de freinage, apte à se trouver dans un premier état de freinage ou dans un deuxième état d'absence de freinage,

on réhabilite l'indicateur (dij) de glissement de roue de son premier état de glissement à son deuxième état d'absence de glissement, lorsque à la fois les indicateurs (dij) de glissement des roues ne sont pas tous dans le premier état (dij = 1) de glissement, le signal (SI) de freinage se trouve dans le premier état de freinage et le glissement (Sxij) associé est inférieur à un septième seuil positif prescrit (S11) et supérieur à un huitième seuil négatif prescrit (S11) pendant une première durée prescrite (T11).

3. Procédé d'estimation suivant l'une quelconque des revendications précédentes, **caractérisé en ce que** l'on obtient à partir d'au moins un organe d'actionnement de freinage par le conducteur un signal (SI) d'indication de freinage, apte à se trouver dans un premier état de freinage ou dans un deuxième état d'absence de freinage, on réhabilite l'indicateur (dij) de glissement de roue de son premier état de glissement à son deuxième état d'absence de glissement, lorsque à la fois les indicateurs (dij) de glissement des roues ne se trouvent pas tous dans le premier état (dij = 1) de glissement, le signal (SI) de freinage se trouve dans le deuxième état d'absence de détection de freinage (SI = 0), la dérivée (dSxij) de glissement est inférieure à un neuvième seuil (dS12) positif prescrit et supérieure à un dixième seuil (dS12) négatif prescrit pendant une deuxième durée (T121), le glissement (Sxij) est inférieur à un onzième seuil (S13) positif prescrit et supérieur à un douzième seuil (S13) négatif prescrit à la fin de ladite deuxième durée (T121).

4. Procédé d'estimation suivant l'une quelconque des revendications précédentes, **caractérisé en ce que** l'on obtient à partir d'au moins un organe d'actionnement de freinage par le conducteur un signal (SI) d'indication de freinage, apte à se trouver dans un premier état de freinage ou dans un deuxième état d'absence de freinage, on réhabilite l'indicateur (dij) de glissement de roue de son premier état de glissement à son deuxième état d'absence de glissement, lorsque à la fois les indicateurs (dij) de glissement des roues se trouvent tous dans le premier état (dij = 1) de glissement, le signal (SI) de freinage se trouve dans le premier état de détection de freinage et la dérivée (dSxij) de glissement est inférieure à un treizième seuil (dS12) positif prescrit et supérieure à un quatorzième seuil (dS12) négatif prescrit pendant une troisième durée prescrite (T122).

5. Procédé d'estimation suivant l'une quelconque des revendications précédentes, **caractérisé en ce que** l'on obtient à partir d'au moins un organe d'actionnement de freinage par le conducteur un signal (SI) d'indication de freinage, apte à se trouver dans un premier état de freinage ou dans un deuxième état d'absence de freinage, on réhabilite l'indicateur (dij) de glissement de roue de son premier état de glissement à son deuxième état d'absence de glissement, lorsque à la fois les indicateurs (dij) de glissement des roues sont tous dans le premier état de glissement, le signal (SI) de freinage se trouve dans le deuxième état d'absence de détection de freinage, la dérivée (dSxij) de glissement est inférieure à un quinzième seuil (dS12) positif prescrit et supérieure à un seizième seuil (dS12) négatif prescrit pendant une deuxième durée (T121).

6. Procédé suivant l'une quelconque des revendications précédentes, **caractérisé en ce que** le calcul de la dérivée (dSxij) de glissement comprend les étapes suivantes :

g) la saisie de données sur la vitesse de rotation des roues, des couples moteurs appliqués sur les roues, des pressions de freinage, du rapport de boîte de vitesses engagé,

h) l'estimation de l'accélération de chaque roue en effectuant une dérivation discrète et un filtrage de la vitesse de rotation de chaque roue,

i) l'estimation du couple appliqué à chaque roue en tenant compte, de la pression de freinage, du rapport de boîte de vitesses engagé et de l'état de l'embrayage,

j) l'estimation de l'inertie des roues pour chacun des essieux avant et arrière du véhicule,

k) la mise en oeuvre d'une transformation géométrique de l'estimation de l'accélération de chaque roue estimée en b),

l) l'estimation de la dérivée du glissement de chaque roue, à partir des valeurs estimées en c), d) et e).

7. Procédé suivant l'une quelconque des revendications précédentes, **caractérisé en ce que** le calcul du glissement (Sxij) de la roue est obtenu par multiplication de la vitesse de rotation ($\omega_{ij}$) de la roue par son rayon délivrant la vitesse linéaire ($V_{ij}$) de la roue, puis par soustraction de ladite vitesse linéaire ainsi obtenue à la vitesse de déplacement longitudinal (Vest) obtenue.

8. Procédé suivant l'une quelconque des revendications précédentes, **caractérisé en ce que** la vitesse (Vest) de déplacement longitudinal du véhicule est obtenue par calcul à partir des vitesses (Wij) de rotation de roues mesurées pour lesquelles l'indicateur (dij) de glissement de roue est dans le deuxième état (dij=0) d'absence de glissement de la roue, sans tenir compte des vitesses (Wij) de rotation de roues mesurées pour lesquelles l'indicateur (dij) de glissement de roue est dans le premier état (dij=1) de glissement.

9. Procédé suivant l'une quelconque des revendications précédentes, **caractérisé en ce que** dans le cas où l'indicateur (dij) de glissement de toutes les roues se trouve dans le premier état (dij=1) de glissement, la vitesse (Vest) de déplacement longitudinal du véhicule est obtenue par intégration d'une accélération longitudinale (Al) mesurée par un capteur (2) d'accélération longitudinale.

10. Procédé suivant l'une quelconque des revendications précédentes, **caractérisé en ce que** l'on obtient à partir d'au moins un organe d'actionnement de freinage par le conducteur un signal (SI) d'indication de freinage, apte à se trouver dans un premier état de freinage ou dans un deuxième état d'absence de freinage, lorsqu'à la fois le glissement d'une roue est négatif et le signal (SI) d'indication de freinage est dans le premier état de freinage, la vitesse (Vest) de déplacement longitudinal du véhicule est obtenue à partir du maximum des vitesses de rotation des roues.

11. Procédé suivant l'une quelconque des revendications précédentes, **caractérisé en ce que** l'on obtient à partir d'au moins un organe d'actionnement de freinage par le conducteur un signal (SI) d'indication de freinage, apte à se trouver dans un premier état de freinage ou dans un deuxième état d'absence de freinage, lorsqu'à la fois le glissement d'une roue est positif et le signal (SI) d'indication de freinage est dans le deuxième état d'absence de freinage, la vitesse (Vest) de déplacement longitudinal du véhicule est obtenue à partir du minimum des vitesses de rotation des roues.

12. Procédé suivant l'une quelconque des revendications précédentes, **caractérisé en ce que**
   on obtient une valeur de couple (Cmi) du ou des moteur(s) sur les roues avant et /ou arrière,
   une pluralité de modes (MOD) de calcul de la vitesse (Vest) de déplacement longitudinal du véhicule sont définis :

   - un premier mode de calcul (MOD=2), lorsque, à la fois le couple sur les roues avant est inférieur à un premier seuil positif prescrit et supérieur à un deuxième seuil négatif prescrit, le couple sur les roues arrière est supérieur à un troisième seuil positif prescrit ou inférieur à un quatrième seuil négatif prescrit,
   - un deuxième mode de calcul (MOD=3), lorsque à la fois le couple sur les roues arrière est inférieur à un cinquième seuil positif prescrit et supérieur à un sixième seuil négatif prescrit, le couple sur les roues avant est supérieur à un septième seuil positif prescrit ou inférieur à un huitième seuil négatif prescrit,
   - un troisième mode de calcul (MOD=1), lorsque les conditions correspondant aux premier et deuxièmes modes de calcul ne sont pas remplies.

13. Procédé suivant la revendication 12, **caractérisé en ce que**

   - dans le premier mode de calcul (MOD=2), la vitesse (Vest) de déplacement longitudinal du véhicule est calculée :

     • à partir de la vitesse de rotation des roues avant, dont l'indicateur (dij) de glissement se trouvant dans le deuxième état (dij=0) d'absence de glissement, ou
     • si toutes les roues avant ont chacune leur indicateur de glissement se trouvant dans le premier état de glissement, à partir de la vitesse de rotation des roues arrière se trouvant dans le deuxième état (dij=0) d'absence de glissement.

14. Procédé suivant l'une quelconque des revendications 12 et 13, **caractérisé en ce que**

   - dans le deuxième mode de calcul (MOD=3), la vitesse (Vest) de déplacement longitudinal du véhicule est calculée :

     • à partir de la vitesse de rotation des roues arrière, dont l'indicateur (dij) de glissement se trouvant dans le deuxième état (dij=0) d'absence de glissement, ou
     • si toutes les roues arrière ont chacune leur indicateur de glissement se trouvant dans le premier état de glissement, à partir de la vitesse de rotation des roues avant se trouvant dans le deuxième état (dij=0) d'absence de glissement.

15. Procédé suivant l'une quelconque des revendications 12 à 14, **caractérisé en ce que**

- dans le troisième mode de calcul (MOD=1), la vitesse (Vest) de déplacement longitudinal du véhicule est calculée à partir de la vitesse de rotation des roues arrière et des roues avant se trouvant dans le deuxième état (dij=0) d'absence de glissement.

16. Procédé suivant l'une quelconque des revendications 12 à 15, **caractérisé en ce que**
on obtient à partir d'au moins un organe d'actionnement de freinage par le conducteur un premier signal (SI) d'indication de freinage, apte à se trouver dans un premier état de freinage ou dans un deuxième état d'absence de freinage, et
pour remplir les conditions des premier et deuxième modes de calcul le premier signal (SI) d'indication de freinage du conducteur doit en plus se trouver dans le deuxième état d'absence de freinage.

17. Procédé suivant l'une quelconque des revendications 12 à 16, **caractérisé en ce que**
on obtient à partir d'un système de régulation de freinage sur les roues avant et sur les roues arrière au moins un deuxième signal (SI2) d'indication de freinage sur les roues avant, apte à se trouver dans un premier état de freinage ou dans un deuxième état d'absence de freinage, et au moins un troisième signal (SI3) d'indication de freinage sur les roues arrière, apte à se trouver dans un premier état de freinage ou dans un deuxième état d'absence de freinage,

- pour remplir les conditions du premier mode (MOD=2) de calcul, à la fois le couple sur les roues avant est inférieur à un premier seuil positif prescrit et supérieur à un deuxième seuil négatif prescrit, le deuxième signal (SI2) d'indication de freinage sur les roues avant se trouve dans le deuxième état d'absence de freinage, le couple sur les roues arrière est supérieur à un troisième seuil positif prescrit ou inférieur à un quatrième seuil négatif prescrit, ou le troisième signal (SI3) d'indication de freinage sur les roues arrière se trouve dans le premier état de freinage,
- pour remplir les conditions du deuxième mode (MOD=3) de calcul, à la fois le couple sur les roues arrière est inférieur à un cinquième seuil positif prescrit et supérieur à un sixième seuil négatif prescrit, le troisième signal (SI3) d'indication de freinage sur les roues arrière se trouve dans le deuxième état d'absence de freinage, le couple sur les roues avant est supérieur à un septième seuil positif prescrit ou inférieur à un huitième seuil négatif prescrit, ou le deuxième signal (SI2) d'indication de freinage sur les roues avant se trouve dans le premier état de freinage.

18. Procédé suivant l'une quelconque des revendications 12 à 17, **caractérisé en ce que** les seuils sont fixés de manière proportionnelle à une répartition de poids prédéterminée du véhicule sur au moins un essieu avant supportant les roues avant et sur au moins un essieu arrière supportant les roues arrière.

19. Procédé suivant l'une quelconque des revendications 12 à 18, **caractérisé en ce que** on fait la moyenne arithmétique des vitesses de rotation de roue retenues dans les modes de calcul, multipliée par un rayon prescrit de roue, pour calculer la vitesse (Vest) de déplacement longitudinal du véhicule.

20. Dispositif pour la mise en oeuvre du procédé suivant l'une quelconque des revendications précédentes, destiné à être embarqué sur un véhicule automobile sur roues, **caractérisé en ce qu'**il comprend :

au moins un capteur (1) de la vitesse (Wij) de rotation de chaque roue (ij) du véhicule,
un moyen (9) d'obtention d'une vitesse (Vest) de déplacement longitudinal du véhicule,
un moyen (11) de calcul du glissement (Sxij) de chaque roue à partir de la vitesse (Wij) de rotation de la roue et de la vitesse (Vest) de déplacement longitudinal obtenue,
un moyen (7) de calcul, pour chaque roue, à partir au moins de la vitesse (Wij) de rotation de roue mesurée et d'au moins une autre grandeur d'une dérivée (dSxij) de glissement de la roue,
un moyen (9) de calcul d'un signal (NF) de non - fiabilité des glissements des roues, prenant un premier état (NF=1) d'absence de fiabilité dans le cas où, pour toutes les roues, un indicateur (dij) de glissement est dans un premier état de glissement (dij=1), et au moins un deuxième état sinon,

- un moyen (15) de génération de l'indicateur (dij) de glissement de chaque roue, pour que
- dans le cas où le signal (NF) de non - fiabilité est dans le deuxième état, l'indicateur (dij) de glissement de roue prend le premier état (dij=1 ) de glissement, lorsque la dérivée (dSxij) de glissement de la roue est supérieure à un premier seuil positif prescrit (dS1) ou lorsque la dérivée (dSxij) de glissement de la roue est inférieure à un deuxième seuil négatif prescrit (dS1) ou lorsque le glissement (Sxij) de la roue est supérieur à un troisième seuil positif prescrit (S2) ou lorsque le glissement (Sxij) de la roue est inférieur à un quatrième seuil négatif prescrit (S3), et prend sinon un deuxième état (dij=0) d'absence de glissement de la roue,
- dans le cas où le signal (NF) de non - fiabilité est dans le premier état (NF=1), l'indicateur (dij) de glissement de roue prend le premier état (dij=1) de glissement lorsque la dérivée (dSxij) de glissement de la roue est supérieure à un cinquième seuil positif prescrit (dS4) ou lorsque la dérivée (dSxij) de glissement de la roue est inférieure à un sixième seuil négatif prescrit (dS4).

## Claims

1. Method for estimating a reference speed of a motor vehicle with wheels, with the aid of at least one computer embedded onboard the vehicle, in which the speed (Wij) of rotation of each wheel (ij) of the vehicle is measured by at least one sensor (1), a speed (Vest) of longitudinal displacement of the vehicle being obtained,
**characterized in that**
for each wheel, the slippage (Sxij) of the wheel is computed on the basis of the speed (Wij) of rotation of the wheel and of the speed (Vest) of longitudinal displacement obtained,
for each wheel, a derivative (dSxij) of slippage of the wheel is computed on the basis at least of the measured wheel rotation speed (Wij) and of at least one other quantity,
a signal (NF) of non-reliability of the slippages of the wheels is computed, taking a first state (NF=1) of absence of reliability in the case where, for all the wheels, a slippage indicator (dij) is in a first slippage state (dij=1), and at least one second state otherwise,

- in the case where the signal (NF) of non-reliability is in the second state, for each wheel, the wheel slippage indicator (dij) takes the first slippage state (dij=1) when the derivative (dSxij) of slippage of the wheel is greater than a first prescribed positive threshold (dS1) or when the derivative (dSxij) of slippage of the wheel is less than a second prescribed negative threshold (dS1) or when the slippage (Sxij) of the wheel is greater than a third prescribed positive threshold (S2) or when the slippage (Sxij) of the wheel is less than a fourth prescribed negative threshold (S3), and otherwise takes a second state (dij=0) of absence of slippage of the wheel,
- in the case where the signal (NF) of non-reliability is in the first state (NF=1), the wheel slippage indicator (dij) takes the first slippage state (dij=1) when the derivative (Sxij) of slippage of the wheel is greater than a fifth prescribed positive threshold (dS4) or when the derivative (dSxij) of slippage of the wheel is less than a sixth prescribed negative threshold (dS4).

2. Method of estimation in accordance with Claim 1, **characterised in that** a braking indication signal (SI), able to be in a first braking state or in a second absence of braking state, is obtained on the basis of at least one driver-operated braking actuation member,
the wheel slippage indicator (dij) is returned from its first slippage state to its second absence of slippage state when at one and the same time the indicators (dij) of slippage of the wheels are not all in the first slippage state (dij = 1), the braking signal (SI) is in the first braking state and the associated slippage (Sxij) is less than a seventh prescribed positive threshold (S11) and greater than an eighth prescribed negative threshold (S11) for a first prescribed duration (T11).

3. Method of estimation in accordance with any one of the preceding claims, **characterised in that** a braking indication signal (SI), able to be in a first braking state or in a second absence of braking state, is obtained on the basis of at least one driver-operated braking actuation member,
the wheel slippage indicator (dij) is returned from its first slippage state to its second absence of slippage state when at one and the same time the indicators (dij) of slippage of the wheels are not all in the first slippage state (dij = 1), the braking signal (SI) is in the second absence of braking detection state (SI = 0), the slippage derivative (dSxij) is less than a ninth prescribed positive threshold (dS12) and greater than a tenth prescribed negative threshold (dS12) for a second duration (T121), the slippage (Sxij) is less than an eleventh prescribed positive threshold (S13) and greater than a twelfth prescribed negative threshold (S13) at the end of the said second duration (T121).

4. Method of estimation in accordance with any one of the preceding claims, **characterized in that** a braking indication signal (SI), able to be in a first braking state or in a second absence of braking state, is obtained on the basis of at least one driver-operated braking actuation member,
the wheel slippage indicator (dij) is returned from its first slippage state to its second absence of slippage state, when at one and the same time the indicators (dij) of slippage of the wheels are all in the first slippage state (dij = 1), the braking signal (SI) is in the first braking detection state and the slippage derivative (dSxij) is less than a thirteenth prescribed positive threshold (dS12) and greater than a fourteenth prescribed negative threshold (dS12) for third prescribed duration (T122).

5. Method of estimation in accordance with any one of the preceding claims, **characterized in that** a braking indication signal (SI), able to be in a first braking state or in a second absence of braking state, is obtained on the basis of at least one driver-operated braking actuation member,
the wheel slippage indicator (dij) is rehabilitated from its first slippage state to its second absence of slippage state when at one and the same time the indicators (dij) of slippage of the wheels are all in the first slippage state, the braking signal (SI) is in the second absence of braking detection state, the slippage derivative (dSxij) is less than a fifteenth prescribed positive threshold (dS12) and greater than a sixteenth prescribed negative threshold (dS12) for a second duration (T121).

6. Method in accordance with any one of the preceding claims, **characterized in that** the computation of the slippage derivative (dSxij) comprises the following steps:

g) the entry of data relating to the speed of rotation of the wheels, of the motor torques applied to the wheels, of the braking pressures, of the gearbox ratio engaged,
h) the estimation of the acceleration of each wheel by performing a discrete differentiation and a filtering of the speed of rotation of each wheel,
i) the estimation of the torque applied to each wheel by taking account of the braking pressure, of the gearbox ratio enraged and of the state of the clutch,
j) the estimation of the inertia of the wheels for each of the front and rear axles of the vehicle,
k) the implementation or a geometric transformation of the estimation of the acceleration of each wheel estimated in b),
l) the estimation of the derivative of the slippage of each wheel, on the basis of the values estimated in c), d) and e).

7. Method in accordance with any one of the preceding claims, **characterized in that** the computation of the slippage (Sxij) of the wheel is obtained by multiplying the rotation speed ($\omega_{ij}$) of the wheel by its radius delivering the linear speed ($V_{ij}$) of the wheel, and then by subtracting the said linear speed thus obtained from the speed of longitudinal displacement (Vest) obtained.

8. Method in accordance with any one of the preceding claims, **characterised in that** the speed (Vest) of longitudinal displacement of the vehicle is obtained by computation on the basis of the measured speeds (Wij) of rotation of wheels for which the wheel slippage indicator (dij) is in the second state (dij=0) of absence of slippage of the wheel, without taking account of the measured speeds (Wij) of rotation of wheels for which the wheel slippage indicator (dij) is in the first slippage state (dij=1).

9. Method in accordance with any one of the preceding claims, **characterized in that** in the case where the indicator (dij) of slippage of all the wheels is in the first slippage state (dij=1), the speed (Vest) of longitudinal displacement of the vehicle is obtained by integration of a longitudinal acceleration (Al) measured, by a sensor (2) of longitudinal acceleration.

10. Method in accordance with any one of the preceding claims, **characterized in that** a braking indication signal (SI), able to be in a first braking state or in a second absence of braking state, is obtained on the basis of at least one driver-operated braking actuation member,
when at one and the same time the slippage of a. wheel is negative and the braking indication signal (SI) is the first braking state, the speed (Vest) of longitudinal displacement of the vehicle is obtained on the basis of the maximum of the speeds of rotation of the wheels.

11. Method in accordance with any one of the preceding claims, **characterized in that** a braking indication signal (SI), able to be in a first braking state or in a second absence of braking state, is obtained on the basis of at least one driver-operated braking actuation member,
when at one and the same time the slippage of a wheel is positive and the braking indication signal (SI) is in the second absence of braking state, the speed (Vest) of longitudinal displacement of the vehicle is obtained on the basis of the minimum of the speeds of rotation of the wheels.

12. Method in accordance with any one of the preceding claims, **characterized in that**
a torque value (Cmi) for the motor (or motors) on the front and/or rear wheels is obtained,
a plurality of modes (MOD) of computation of the speed (Vest) of longitudinal displacement of vehicle are defined:

- a first mode of computation (HOD=2), when, at one and the same time the torque on the front wheels is less than a first prescribed positive threshold and greater than a second prescribed negative threshold, the torque on the rear wheels is greater than a third prescribed positive threshold or less than a fourth prescribed negative threshold,
- a second mode of computation (MOD=3), when at one and the same time the torque on the rear wheels is less than a fifth prescribed positive threshold and greater than a sixth prescribed negative threshold, the torque on the front wheels is greater than a seventh prescribed positive threshold or less than an eighth prescribed negative threshold,
- a third mode of computation (MOD=1), when the conditions corresponding to the first and second modes of computation are not fulfilled.

**13.** Method in accordance with Claim 12, **characterized in that**

- in the first mode of computation (MOD=2), the speed (Vest) of longitudinal displacement of the vehicle is computed:

• on the basis of the speed of rotation of the front wheels, whose slippage indicator (dij) is in the second absence of slippage state (dij=0), or
• if all the front wheels each have their slippage indicator in the first slippage state, on the basis of the speed of rotation of the rear wheels in the second absence of slippage state (dij=0).

**14.** Method in accordance with either one of Claims 12 and 13, **characterized in that**

- in the second mode of computation (MOD=3), the speed (Vest) of longitudinal displacement of the vehicle is computed:

• on the basis of the speed of rotation of the rear wheels, whose slippage indicator (dij) is in the second state (dij=0) of absence of slippage, or
• if all the rear wheels each have their slippage indicator in the first slippage state, on the basis or the speed of rotation of the front wheels in the second state (dij=0) of absence of slippage.

**15.** Method in accordance with any one of Claims 12 to 14, **characterized in that**

- in the third mode of computation (MOD=1), the speed (Vest) of longitudinal displacement of vehicle is computed on the basis of the speed of rotation of the rear wheels and of the front wheels in the second state (dij=0) of absence of slippage.

**16.** Method in accordance with any one of Claims 12 to 15, **characterized in that**
a first braking indication signal (SI), able to be in a first braking state or in a second absence of braking state, is obtained on the basis of at least one driver-operated braking actuation member, and
to fulfil the conditions or the first and second modes of computation the first driver braking indication signal (SI) must additionally be in the second absence of braking state.

**17.** Method in accordance with any one of Claims 12 to 16, **characterized in that**
at least one second braking indication signal (SI2) relating to the front wheels, able to be in a first braking state or in a second absence of braking state, and at least one third braking indication signal (SI3) relating to the rear wheels, able to be in a first braking state or in a second absence of braking state, are obtained on the basis of a braking regulation system relating to the front wheels and to the rear wheels,

- to fulfil the conditions of the first mode (MOD=2) of computation, at one and the same time the torque on the front wheels is less than a first prescribed positive threshold and greater than a second prescribed negative threshold, the second braking indication signal (SI2) relating to the front wheels is in the second absence of braking state, the torque on the rear wheels is greater than a third prescribed positive threshold or less than a fourth prescribed negative threshold, or the third braking indication signal (SI3) relating to the rear wheels is in the first braking state,
- to fulfil the conditions of the second mode (MOD=3) of computation, at one and the same time the torque on the rear wheels is less than a fifth prescribed positive threshold and greater than a sixth prescribed negative threshold, the third braking indication signal (SI3) relating to the rear wheels is in the second absence of braking state, the torque on the front wheels is greater than a seventh prescribed positive threshold or less than an eighth prescribed negative threshold, or the second braking indication signal (SI2) relating to the front wheels is in the first braking state.

18. Method in accordance with any one or Claims 12 to 17, **characterized in that** the thresholds are fixed in a manner proportional to a predetermined distribution of weight of the vehicle on at least one front axle supporting the front wheels and on at least one rear axle supporting the rear wheels.

19. Method in accordance with any one of Claim 12 to 18, **characterized in that** to compute the speed (Vest) of longitudinal displacement of the vehicle, the arithmetic average of the wheel rotation speeds employed in the modes of computation is multiplied by a prescribed wheel radius.

20. Device for the implementation of the method in accordance with any one of the preceding claims, intended to be embedded onboard a. motor vehicle with wheels, **characterized in that** it comprises:

at least one sensor (1) of the speed (Wij) of rotation of each wheel (ij) of the vehicle,
a means (9) for obtaining a speed (Vest) of longitudinal displacement of the vehicle,
a means (11) for computing the slippage (Sxij) of each wheel on the basis of the speed (Wij) of rotation of the wheel and of the speed (Vest) of longitudinal displacement obtained,
a means (7) for computing, for each wheel, on the basis at least of the measured wheel rotation speed (Wij) and of at least one other quantity, a derivative (dSxij) of slippage of the wheel,
a means (9) for computing a signal (NF) of non-reliability of the slippages of the wheels, taking a first state (NF=1) of absence of reliability in the case where, for all the wheels, a slippage indicator (dij) is in a first slippage state (dij=1), and at least one second state otherwise,

- a means (15) for generating the indicator (dij) of slippage of each wheel, so that
- in the case where the signal (NF) of non-reliability is in the second state, the wheel slippage indicator (dij) takes the first slippage state (dij=1) when the derivative (dSxij) of slippage of the wheel is greater than a first prescribed positive threshold (dS1) or when the derivative (dSxij) of slippage of the wheel is less than a second prescribed negative threshold (dS1) or when the slippage (Sxij) of the wheel is greater than a third prescribed positive threshold (S2) or when the slippage (Sxij) of the wheel is less than a fourth prescribed negative threshold (S3), and otherwise takes a second state (dij=0) of absence of slippage of the wheel,
- in the case where the signal (NF) of non-reliability is in the first state (NF=1), the wheel slippage indicator (dij) takes the first slippage state (dij=1) when the derivative (Sxij) of slippage of the wheel is greater than a fifth prescribed positive threshold (dS4) or when the derivative (dSxij) of slippage of the wheel is less than a sixth prescribed negative threshold (dS4).

**Patentansprüche**

1. Verfahren zum Schätzen einer Referenzgeschwindigkeit eines Kraftfahrzeugs auf Rädern mit Hilfe eines Rechners an Bord des Fahrzeugs, wobei durch wenigstens einen Sensor (1) die Drehgeschwindigkeit (Wij) jedes Rades (ij) des Fahrzeugs gemessen wird, wobei eine longitudinale Verlagerungsgeschwindigkeit (Vest) des Fahrzeugs erhalten wird,
**dadurch gekennzeichnet, dass**
für jedes Rad der Schlupf (Sxij) des Rades anhand der Drehgeschwindigkeit (Wij) des Rades und der erhaltenen longitudinalen Verlagerungsgeschwindigkeit (Vest) berechnet wird,
für jedes Rad anhand wenigstens der gemessenen Drehgeschwindigkeit (Wij) des Rades und wenigstens einer anderen Größe eine Ableitung (dSxij) des Rades berechnet wird,
ein Unzuverlässigkeitssignal (NF) der Schlupfe der Räder berechnet wird, das einen ersten Zustand (NF = 1) fehlender Zuverlässigkeit in dem Fall annimmt, in dem für alle Räder ein Schlupfindikator (dij) in einem ersten Zustand (dij = 1) mit Schlupf ist, und andernfalls wenigstens einen zweiten Zustand annimmt,

- in dem Fall, in dem das Unzuverlässigkeitssignal (NF) in dem zweiten Zustand ist, für jedes Rad der Radschlupfindikator (dij) den ersten Zustand (dij = 1) mit Schlupf annimmt, wenn die Ableitung (dSxij) des Radschlupfes größer als ein erster, vorgeschriebener, positiver Schwellenwert (dS1) ist oder wenn die Ableitung (dSxij) des Radschlupfes kleiner als ein zweiter, vorgeschriebener, negativer Schwellenwert (dS1) ist oder wenn der Schlupf (Sxij) des Rades größer als ein dritter, vorgeschriebener, positiver Schwellenwert (S2) ist oder wenn der Schlupf (Sxij) des Rades kleiner als ein vierter, vorgeschriebener, negativer Schwellenwert (S3) ist, und andernfalls einen zweiten Zustand (dij = 0) ohne Radschlupf annimmt,
- in dem Fall, in dem das Unzuverlässigkeitssignal (NF) in dem ersten Zustand (NF = 1) ist, der Indikator (dij) des Radschlupfes den ersten Zustand (dij = 1) mit Schlupf annimmt, wenn die Ableitung (dSxij) des Radschlupfes größer als ein fünfter, vorgeschriebener, positiver Schwellenwert (dS4) ist oder wenn die Ableitung (dSxij) des Radschlupfes kleiner als ein sechster, vorgeschriebener, negativer Schwellenwert (dS4) ist.

2. Schätzverfahren nach Anspruch 1, **dadurch gekennzeichnet, dass** von wenigstens einem Organ für die Betätigung der Bremse durch den Fahrer ein Bremsangabesignal (SI) erhalten wird, das in einem ersten Zustand mit Bremsen oder in einem zweiten Zustand ohne Bremsen sein kann,
der Radschlupfindikator (dij) von seinem ersten Zustand mit Schlupf wieder in seinen zweiten Zustand ohne Schlupf versetzt wird, wenn während einer vorgeschriebenen ersten Dauer (T11) zugleich alle Radschlupfindikatoren (dij) nicht im ersten Zustand (dij = 1) mit Schlupf sind, das Bremssignal (SI) im ersten Zustand mit Bremsen ist und der zugeordnete Schlupf (Sxij) kleiner als ein siebter, vorgeschriebener, positiver Schwellenwert (S11) und größer als ein achter, vorgeschriebener, negativer Schwellenwert (S11) ist.

3. Schätzverfahren nach einem der vorhergehenden Ansprüche, **dadurch gekennzeichnet, dass** von wenigstens einem Organ für die Betätigung der Bremse durch den Fahrer ein Bremsangabesignal (SI) erhalten wird, das in einem ersten Zustand mit Bremsen oder in einem zweiten Zustand ohne Bremsen sein kann,
der Radschlupfindikator (dij) von seinem ersten Zustand mit Schlupf wieder in seinen zweiten Zustand ohne Schlupf versetzt wird, wenn während einer zweiten Dauer (T121) zugleich alle Radschlupfindikatoren (dij) nicht im ersten Zustand (dij = 1) mit Schlupf sind, das Bremssignal (SI) im zweiten Zustand ohne Bremsdetektion (SI = 0) ist, die Ableitung (dSxij) des Schlupfes kleiner als ein neunter, vorgeschriebener, positiver Schwellenwert (dS12) und größer als ein zehnter, vorgeschriebener, negativer Schwellenwert (dS12) ist und wenn am Ende der zweiten Dauer (T121) der Schlupf (Sxij) kleiner als ein elfter, vorgeschriebener, positiver Schwellenwert (S13) und größer als ein zwölfter, vorgeschriebener, negativer Schwellenwert (S13) ist.

4. Schätzverfahren nach einem der vorhergehenden Ansprüche, **dadurch gekennzeichnet, dass** von wenigstens einem Organ für die Betätigung der Bremse durch den Fahrer ein Bremsangabesignal (SI) erhalten wird, das in einem ersten Zustand mit Bremsen oder in einem zweiten Zustand ohne Bremsen sein kann,
der Radschlupfindikator (dij) von seinem ersten Zustand mit Schlupf wieder in seinen zweiten Zustand ohne Schlupf versetzt wird, wenn während einer dritten vorgeschriebenen Dauer (T122) zugleich alle Radschlupfindikatoren (dij) im ersten Zustand (dij = 1) mit Schlupf sind, das Bremssignal (SI) im ersten Zustand mit Bremsdetektion ist und die Ableitung (dSxij) des Schlupfes kleiner als ein dreizehnter, vorgeschriebener, positiver Schwellenwert (dS12) und größer als ein vierzehnter, vorgeschriebener, negativer Schwellenwert (dS12) ist.

5. Schätzverfahren nach einem der vorhergehenden Ansprüche, **dadurch gekennzeichnet, dass** von wenigstens einem Organ für die Betätigung der Bremse durch den Fahrer ein Bremsangabesignal (SI) erhalten wird, das in einem ersten Zustand mit Bremsen oder in einem zweiten Zustand ohne Bremsen sein kann,
der Radschlupfindikator (dij) von seinem ersten Zustand mit Schlupf wieder in seinen zweiten Zustand ohne Schlupf versetzt wird, wenn während einer zweiten Dauer (T121) zugleich alle Radschlupfindikatoren (dij) im ersten Zustand mit Schlupf sind, das Bremssignal (SI) im zweiten Zustand ohne Bremsdetektion ist, die Ableitung (dSxij) des Schlupfes kleiner als ein fünfzehnter, vorgeschriebener, positiver Schwellenwert (dS12) und größer als ein sechzehnter, vorgeschriebener, negativer Schwellenwert (dS12) ist.

6. Verfahren nach einem der vorhergehenden Ansprüche, **dadurch gekennzeichnet, dass** die Berechnung der Ableitung (dSxij) des Schlupfes die folgenden Schritte umfasst:

g) Erfassen von Daten bezüglich der Drehgeschwindigkeit der Räder, der an die Räder angelegten Motordrehmomente, der Bremsdrücke und des eingelegten Getriebeübersetzungsverhältnisses,
h) Schätzen der Beschleunigung jedes Rades durch Ausführen eine diskreten Ableitung und einer Filterung der Drehgeschwindigkeit jedes Rades,
i) Schätzen des an jedes Rad angelegten Drehmoments unter Berücksichtigung des Bremsdrucks, des eingelegten Getriebeübersetzungsverhältnisses und des Kupplungszustandes,
j) Schätzen der Trägheit der Räder sowohl für die Vorderachse als auch für die Hinterachse des Fahrzeugs,
k) Ausführen einer geometrischen Transformation der Schätzung der Beschleunigung jedes Rades, die in b) geschätzt wird,
l) Schätzen der Ableitung des Schlupfes jedes Rades anhand der Werte, die in c), d) und e) geschätzt werden.

**7.** Verfahren nach einem der vorhergehenden Ansprüche, **dadurch gekennzeichnet, dass** die Berechnung des Schlupfes ($S_{xij}$) des Rades durch Multiplizieren der Drehgeschwindigkeit ($\omega_{ij}$) des Rades mit seinem Radius, was die Lineargeschwindigkeit ($V_{ij}$) des Rades ergibt, und dann durch Subtraktion der somit erhaltenen Lineargeschwindigkeit von der erhaltenen longitudinalen Verlagerungsgeschwindigkeit ($V_{est}$) erhalten wird.

**8.** Verfahren nach einem der vorhergehenden Ansprüche, **dadurch gekennzeichnet, dass** die longitudinale Verlagerungsgeschwindigkeit ($V_{est}$) des Fahrzeugs durch Berechnen anhand der gemessenen Raddrehgeschwindigkeiten ($W_{ij}$), für die der Indikator ($d_{ij}$) des Radschlupfes im zweiten Zustand ($d_{ij}$ = 0) ohne Radschlupf ist, ohne die gemessenen Raddrehgeschwindigkeiten ($W_{ij}$) zu berücksichtigen, für die der Indikator ($d_{ij}$) des Radschlupfes im ersten Zustand ($d_{ij}$ = 1) mit Schlupf ist, erhalten wird.

**9.** Verfahren nach einem der vorhergehenden Ansprüche, **dadurch gekennzeichnet, dass** in dem Fall, in dem der Schlupfindikator ($d_{ij}$) aller Räder im ersten Zustand ($d_{ij}$ = 1) mit Schlupf ist, die longitudinale Verlagerungsgeschwindigkeit ($V_{est}$) des Fahrzeugs durch Integration einer longitudinalen Beschleunigung ($A_l$), die durch einen Längsbeschleunigungssensor (2) gemessen wird, erhalten wird.

**10.** Verfahren nach einem der vorhergehenden Ansprüche, **dadurch gekennzeichnet, dass** von wenigstens einem Organ für die Betätigung der Bremse durch den Fahrer ein Bremsangabesignal ($SI$) erhalten wird, das in einem ersten Zustand mit Bremsen oder in einem zweiten Zustand ohne Bremsen sein kann,
dann, wenn zugleich der Schlupf eines Rades negativ ist und das Bremsangabesignal ($SI$) im ersten Zustand mit Bremsen ist, die longitudinale Verlagerungsgeschwindigkeit ($V_{est}$) des Fahrzeugs anhand der größten Raddrehgeschwindigkeit erhalten wird.

**11.** Verfahren nach einem der vorhergehenden Ansprüche, **dadurch gekennzeichnet, dass** von wenigstens einem Organ für die Betätigung der Bremse durch den Fahrer ein Bremsangabesignal ($SI$) erhalten wird, das in einem ersten Zustand mit Bremsen oder in einem zweiten Zustand ohne Bremsen sein kann,
dann, wenn zugleich der Schlupf eines Rades positiv ist und das Bremsangabesignal ($SI$) im zweiten Zustand ohne Bremsen ist, die longitudinale Verlagerungsgeschwindigkeit ($V_{est}$) des Fahrzeugs anhand der kleinsten Raddrehgeschwindigkeit erhalten wird.

**12.** Verfahren nach einem der vorhergehenden Ansprüche, **dadurch gekennzeichnet, dass**
ein Drehmomentwert ($C_{mi}$) des oder der Motoren an den Vorderrädern und/oder den Hinterrädern erhalten wird, mehrere Arten ($MOD$) für die Berechnung der longitudinalen Verlagerungsgeschwindigkeit ($V_{est}$) des Fahrzeugs definiert sind:

- eine erste Berechnungsart ($MOD$ = 2), wenn zugleich das Drehmoment an den Vorderrädern kleiner als ein erster, vorgeschriebener, positiver Schwellenwert und größer als ein zweiter, vorgeschriebener, negativer Schwellenwert ist und das Drehmoment an den Hinterrädern größer als ein dritter, vorgeschriebener, positiver Schwellenwert oder kleiner als ein vierter, vorgeschriebener, negativer Schwellenwert ist,
- eine zweite Berechnungsart ($MOD$ = 3), wenn zugleich das Drehmoment an den Hinterrädern kleiner als ein fünfter, vorgeschriebener, positiver Schwellenwert und größer als ein sechster, vorgeschriebener, negativer Schwellenwert ist und das Drehmoment an den Vorderrädern größer als ein siebter, vorgeschriebener, positiver Schwellenwert oder kleiner als ein achter, vorgeschriebener, negativer Schwellenwert ist,
- eine dritte Berechnungsart ($MOD$ = 1), wenn die Bedingungen, die der ersten und der zweiten Berechnungsart entsprechen, nicht erfüllt sind.

**13.** Verfahren nach Anspruch 12, **dadurch gekennzeichnet, dass**

- in der ersten Berechnungsart ($MOD$ = 2) die longitudinale Verlagerungsgeschwindigkeit ($V_{est}$) des Fahrzeugs berechnet wird:

· anhand der Drehgeschwindigkeit der Vorderräder, deren Schlupfindikator ($d_{ij}$) im zweiten Zustand ($d_{ij}$ = 0) ohne Schlupf ist, oder
· anhand der Drehgeschwindigkeit der Hinterräder, die sich im zweiten Zustand ($d_{ij}$ = 0) ohne Schlupf befinden, falls alle Vorderräder einen Schlupfindikator besitzen, der im ersten Zustand mit Schlupf ist.

**14.** Verfahren nach einem der Ansprüche 12 und 13, **dadurch gekennzeichnet, dass**

- in der zweiten Berechnungsart (MOD = 3) die longitudinale Verlagerungsgeschwindigkeit (Vest) des Fahrzeugs berechnet wird:

· anhand der Drehgeschwindigkeit der Hinterräder, deren Schlupfindikator (dij) im zweiten Zustand (dij = 0) ohne Schlupf ist, oder
· anhand der Drehgeschwindigkeit der Vorderräder, die sich im zweiten Zustand (dij = 0) ohne Schlupf befinden, falls alle Hinterräder einen Schlupfindikator haben, der im ersten Zustand mit Schlupf ist.

15. Verfahren nach einem der Ansprüche 12 bis 14, **dadurch gekennzeichnet, dass**

- in der dritten Berechnungsart (MOD = 1) die longitudinale Verlagerungsgeschwindigkeit (Vest) des Fahrzeugs anhand der Drehgeschwindigkeit der Hinterräder und der Vorderräder, die im zweiten Zustand (dij = 0) ohne Schlupf sind, berechnet wird.

16. Verfahren nach einem der Ansprüche 12 bis 15, **dadurch gekennzeichnet, dass** wenigstens von einem Organ für die Betätigung der Bremse durch den Fahrer ein erstes Bremsangabesignal (SI) erhalten wird, das in einem ersten Zustand mit Bremsen oder in einem zweiten Zustand ohne Bremsen sein kann, und um die Bedingungen der ersten und der zweiten Berechnungsart zu erfüllen, das erste Signal (SI) für die Angabe eines Bremsens durch den Fahrer außerdem im zweiten Zustand ohne Bremsen sein muss.

17. Verfahren nach einem der Ansprüche 12 bis 16, **dadurch gekennzeichnet, dass** anhand eines Bremsregulierungssystems an den Vorderrädern und an den Hinterrädern wenigstens ein zweites Signal (SI2) für die Angabe eines Bremsens an den Vorderrädern, das in einem ersten Zustand mit Bremsen oder in einem zweiten Zustand ohne Bremsen sein kann, und wenigstens ein drittes Signal (SI3) für die Angabe des Bremsens an den Hinterrädern, das in einem ersten Zustand mit Bremsen oder in einem zweiten Zustand ohne Bremsen sein kann, erhalten werden,

- um die Bedingungen der ersten Berechnungsart (MOD = 2) zu erfüllen, zugleich das Drehmoment an den Vorderrädern kleiner als ein erster, vorgeschriebener, positiver Schwellenwert und größer als ein zweiter, vorgeschriebener, negativer Schwellenwert ist, das zweite Signal (SI2) für die Angabe des Bremsens an den Vorderrädern im zweiten Zustand ohne Bremsen ist, das Drehmoment an den Hinterrädern größer als ein dritter, vorgeschriebener, positiver Schwellenwert oder kleiner als ein vierter, vorgeschriebener, negativer Schwellenwert ist oder das dritte Signal (SI3) für die Angabe des Bremsens an den Hinterrädern in dem ersten Zustand mit Bremsen ist,
- um die Bedingungen der zweiten Berechnungsart (MOD = 3) zu erfüllen, zugleich das Drehmoment an den Hinterrädern kleiner als ein fünfter, vorgeschriebener, positiver Schwellenwert und größer als ein sechster, vorgeschriebener negativer Schwellenwert ist, das dritte Signal (SI3) für die Angabe des Bremsens an den Hinterrädern in dem zweiten Zustand ohne Bremsen ist, das Drehmoment an den Vorderrädern größer als ein siebter, vorgeschriebener, positiver Schwellenwert oder kleiner als ein achter, vorgeschriebener, negativer Schwellenwert ist oder das zweite Signal (SI2) für die Angabe des Bremsens an den Vorderrädern in dem ersten Zustand mit Bremsen ist.

18. Verfahren nach einem der Ansprüche 12 bis 17, **dadurch gekennzeichnet, dass** die Schwellenwerte proportional zu einer vorgegebenen Gewichtsverteilung des Fahrzeugs an wenigstens einer Vorderachse, die die Vorderräder trägt, und an wenigstens einer Hinterachse, die die Hinterräder trägt, festgelegt sind.

19. Verfahren nach einem der Ansprüche 12 bis 18, **dadurch gekennzeichnet, dass** der arithmetische Mittelwert der Raddrehgeschwindigkeiten, die in den Berechnungsarten gehalten werden, gebildet wird und mit einem vorgeschriebenen Radius des Rades multipliziert wird, um die longitudinale Verlagerungsgeschwindigkeit (Vest) des Fahrzeugs zu berechnen.

20. Vorrichtung für die Ausführung des Verfahrens nach einem der vorhergehenden Ansprüche, die dazu vorgesehen ist, an Bord eines Kraftfahrzeugs auf Rädern angeordnet zu sein, **dadurch gekennzeichnet, dass** sie umfasst:

wenigstens einen Sensor (1) für die Drehgeschwindigkeit (Wij) jedes Rades (ij) des Fahrzeugs,
ein Mittel (9) zum Erhalten einer longitudinalen Verlagerungsgeschwindigkeit (Vest) des Fahrzeugs,
ein Mittel (11) zum Berechnen des Schlupfes (Sxij) jedes Rades anhand der Drehgeschwindigkeit (Wij) des Rades und der erhaltenen longitudinalen Verlagerungsgeschwindigkeit (Vest),

ein Mittel (7) zum Berechnen einer Ableitung (dSxij) des Radschlupfs wenigstens anhand der gemessenen Drehgeschwindigkeit (Wij) des Rades und wenigstens einer anderen Größe für jedes Rad,
ein Mittel (9) zum Berechnen eines Unzuverlässigkeitssignals (NF) der Schlupfe der Räder, das einen ersten Zustand (NF = 1) fehlender Zuverlässigkeit in dem Fall annimmt, in dem für alle Räder ein Schlupfindikator (dij) in einem ersten Zustand (dij = 1) mit Schlupf ist, und andernfalls wenigstens einen zweiten Zustand annimmt,
ein Mittel (15) zum Erzeugen des Schlupfindikators (dij) für jedes Rad, damit

- in dem Fall, in dem das Unzuverlässigkeitssignal (NF) im zweiten Zustand ist, der Radschlupfindikator (dij) den ersten Zustand (dij = 1) mit Schlupf annimmt, wenn die Ableitung (dSxij) des Radschlupfs größer als ein erster, vorgeschriebener, positiver Schwellenwert (dS1) ist oder wenn die Ableitung (dSxij) des Radschlupfs kleiner als ein zweiter, vorgeschriebener, negativer Schwellenwert (dS1) ist oder wenn der Schlupf (Sxij) des Rades größer als ein dritter, vorgeschriebener, positiver Schwellenwert (S2) ist oder wenn der Schlupf (Sxij) des Rades kleiner als ein vierter, vorgeschriebener, negativer Schwellenwert (S3) ist, und andernfalls einen zweiten Zustand (dij = 0) ohne Radschlupf annimmt,
- in dem Fall, in dem das Unzuverlässigkeitssignal (NF) in dem ersten Zustand (NF = 1) ist, der Radschlupfindikator (dij) den ersten Zustand (dij = 1) mit Schlupf annimmt, wenn die Ableitung (dSxij) des Radschlupfes größer als ein fünfter, vorgeschriebener, positiver Schwellenwert (dS4) ist oder wenn die Ableitung (dSxij) des Radschlupfes kleiner als ein sechster, vorgeschriebener, negativer Schwellenwert (dS4) ist.

FIG.1

## FIG.2

## FIG.4

## FIG.5

## FIG.3

71

$\omega_{ij}$

$C_{mi}$

$T_{fij}$

$CL_f$

$CL_r$

72

74

75

73

$\boxed{\begin{array}{c} * \\ / \end{array}}$ → $S_{ij} = dS_{xij}$

76

77

7

FIG.6

FIG.7

FIG.8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102004040757 A

**Littérature non-brevet citée dans la description**

- **PUSCA R et al.** Fuzzy logic based control for electric vehicle with four separate traction drives. *VTC SPRING 2002. IEEE 55TH. VEHICULAR TECH-NOLOGY CONFERENCE. PROCEEDINGS. BIR-MINGHAM, AL, MAY 6 - 9, 2002, IEEE VEHICULAR TECHNOLGY CONFERENCE,* 06 Mai 2002, vol. 1, ISBN 0-7803-7484-3, 2089-2096